# EUROPEAN PATENT SPECIFICATION

(11) **EP 2 741 199 B1**
(45) Date of publication and mention of the grant of the patent: **05.08.2020**
(21) Application number: 13195034.7
(22) Date of filing: 29.11.2013
(51) Int. Cl.: G06F 3/0488, G06F 21/36

(54) **Application individual lock mechanism for a touch screen device**
Anwendungverriegelungsmechanismus für ein Touchscreen-Gerät
Verrouillage individuel d'application pour un appareil à écran tactile

(30) Priority: 06.12.2012 US 201261734099 P; 31.12.2012 KR 20120158438
(43) Date of publication of application: 11.06.2014
(73) Proprietor: Samsung Electronics Co., Ltd., Gyeonggi-do 443-742 (KR)
(72) Inventor: Kim, Eun-Young, 443-742 Gyeonggi-do (KR); Kim, Hyun-Young, 443-742 Gyeonggi-do (KR); Kim, Chul-Joo, 443-742 Gyeonggi-do (KR); Sun, Kwang-Won, 443-742 Gyeonggi-do (KR); Kim, Kang-Tae, 443-742 Gyeonggi-do (KR); Baek, Kun-Woo, 443-742 Gyeonggi-do (KR); Youn, Hee-Ran, 443-742 Gyeonggi-do (KR)
(74) Representative: HGF

(56) References cited:
- EP-A1- 1 816 580
- US-A1- 2007 011 461
- US-A1- 2012 079 586
- Anonymous: "[Cydia] Programme auf dem iPhone mit einem Passwort schützen - Zwei Cydia-Apps im Vergleich | All about my Mac", , 22 August 2010 (2010-08-22), XP055108069, Retrieved from the Internet: URL:http://allaboutmymac.wordpress.com/201 0/08/22/cydia-programme-auf-dem-iphone-mit -einem-passwort-schu%CC%88tzen-zwei-cydia- apps-im-vergleich/ [retrieved on 2014-03-14]
- "Quick Start Guide SAMSUNG GT-I9506 phone (Glaxy S4)", , 4 December 2012 (2012-12-04), XP055252795, Retrieved from the Internet: URL:https://www.vodafone.co.nz/MEDIA_Produ ctCatalog/m13701682_User-Guide-GT-I9506.pd f [retrieved on 2016-02-24]

## Description

### TECHNICAL FIELD

The present disclosure relates to a display device and a method of controlling the same. More particularly, the present disclosure relates to a display device which controls a display of a window in which an application is executed, and a method of controlling the same.

### BACKGROUND

A desktop computer may have at least one display device, for example, a monitor. A mobile device, ,for example, a mobile phone, a smart phone, a tablet PC, or any other similar mobile device using a touch screen may also have a display device.

A user of the desktop computer may divide a screen of the display device according to a working environment, for example, the user may horizontally or vertically divide the screen while displaying a plurality of windows, and may use the divided screens. When a web browser is executed, the user can move a web page in an up or down direction of the web page by using a page up button or a page down button arranged in a keyboard. When the user uses a mouse instead of the keyboard, the user can move in the up or down direction of the web page by selecting a scroll bar located in a side part of the web page by using a cursor, or by any other suitable manner using the mouse. Further, the user can move the web page in the up or down direction of the web page by selecting a top button displayed as a text or an icon located in a bottom part of the web page.

The mobile device may have a smaller size of the display device and the displayed screen in comparison with the desktop computer and the mobile device may have a limitation in an input, and the user may have a difficulty in dividing and then using a divided screen of the display device of the mobile device.

Further, the mobile device can execute various applications, such as basic applications produced by a manufacturer of the mobile device and then installed in the mobile device and additional applications downloaded from an application selling site through the Internet. The additional applications may be developed by general users and registered in the application selling site. Accordingly, anyone can freely sell applications developed by himself/herself to users of the mobile device through the application selling site. Accordingly, tens of thousands to hundreds of thousands of free or charge applications are provided to the current mobile devices according to types of mobile devices.

Although various applications, which simulate a consumers' curiosity and satisfy consumers' demands, are provided to the mobile device, since the mobile device is provided to have a portable size, the mobile device has a limitation in a size and a User Interface (UI) thereof. Accordingly, the users may feel inconvenience in executing a plurality of applications in the mobile device. For example, when one application is executed in the mobile device, the application is displayed in an entire display area. Further, when the user desires to execute another application, the user should first end the currently executed application and then select an execution key for executing the desired application. That is, in order to execute several applications in the mobile device, processes of executing and ending the respective applications should be repeated, which makes the users feel cumbersomeness. Further, a method of simultaneously executing the several applications in the mobile device has not been readily provided.

Meanwhile, after a user executes a plurality of applications in the mobile device, another user may use the corresponding mobile device. In this case, the user's privacy may be invaded and/or compromised by the other user, and accordingly, there is a need to develop a technology preventing another user from using a particular application. A conventional screen lock technology adopts a configuration of locking an entire screen instead of a particular application, and thus another user cannot use the mobile device at all.

The above information is presented as background information only to assist with an understanding of the present disclosure. No determination has been made, and no assertion is made, as to whether any of the above might be applicable as prior art with regard to the present disclosure.

European Patent Application Publication No. EP 1816580 entitled "Secure device sharing" in the name of Research In Motion Limited discloses a method of locking tasks on a mobile communications device so that the user can share the device with other users without risking inappropriate use of the device by those other users. The user may define different lock profiles wherein different tasks are permitted under different profiles. Tasks that will not be permitted under a lock profile must be closed before that lock profile is implemented.

The 'Locktopus' and 'Lockdown Pro' apps for use with iPhones allow a user to require that the correct password be entered before that app that be accessed.

US Patent Application Publication No. US2007/0011461 entitled "Personal Data Security System And Method for Handeld devices" in the name of Yau-Ren Jeng discloses a system for handheld device which allows a user to password protect certain functions applications and data in the device. The document discloses the use of different levels of secrecy, such that certain items would be accessible at one level but locked at a more secure level of secrecy. Document US 2012/079586 A1 (BROWN MICHAEL KENNETH [CA] ET AL) 29 March 2012 (2012-03-29) describes an application level screen saver, with password protected reactivation. The applications are sorted in categories and these categories may have different inactivity timeout values before greying out the application thumbnails and locking the corresponding applications. Application data belonging to different groups may be saved in different memory areas.

### SUMMARY

Aspects of the present disclosure are to address at least the above-mentioned problems and/or disadvantages and to provide at least the advantages described below.

The invention is defined solely by the independent claims . Different embodiments are given in the dependent claims.

Accordingly, an aspect of the present disclosure is to provide a display device which can display windows individually in a locked state instead of displaying an entire screen in a locked state, and a method of controlling the same.

In accordance with an aspect of the present disclosure, a method of controlling a display device that displays an application execution window on a screen of the display device is provided. The method includes displaying at least one windows, each of the at least one window displaying an application, detecting a lock command which is inputted into a particular window of the at least one windows while the particular window displays a particular application, and changing displaying of the particular window from displaying the particular application to displaying an image corresponding to a lock state.

In accordance with another aspect of the present disclosure, a display device is provided. The display device includes a touch screen configured to display at least one window, each of the at least one window displaying an application, and a controller configured to detect a lock command which is inputted into a particular window of the at least one window while the particular window displays a particular application, and configured to control to change displaying of the particular window from displaying the particular application to displaying an image corresponding to a lock state.

In accordance with another aspect of the present disclosure, a method of controlling a display device displaying an application execution window on a screen is provided. The method includes displaying a window in a locked state while an application is executed, determining whether an unlock command is input into the window displayed in the locked state, if the unlock command is input into the window displayed in the locked state, displaying a password input screen into which a password can be input, and if a preset password is input, replacing a screen displayed in the locked sate of the window into which the unlock command has been input with an application execution screen and displaying the replaced application execution screen.

In accordance with another aspect of the present disclosure, a display device is provided. The display device includes a touch screen configured to display a window in a locked state while an application is executed, and a controller configured to determine whether an unlock command is input into the window displayed in the locked state, configured to display a password input screen into which a password is inputted if the unlock command is input, and configured to replace a screen displayed in the locked state of the window into which the unlock command has been input with an application execution screen and display the replaced application execution screen if a preset password is input.

In accordance with another aspect of the present disclosure, a method of controlling a display device displaying an application execution window on a screen is provided. The method includes displaying a window executing an application outputting a sound, determining whether a lock command is input into a particular window of at least one window, and if it is determined that the lock command has been input, controlling not to output a sound output from the window into which the lock command has been input.

In accordance with another aspect of the present disclosure, a display device is provided. The display device includes a touch screen configured to display a window executing an application outputting a sound, a speaker module configured to output the sound of the application, and a controller configured to determine whether a lock command is input into a particular window of one or more windows, and configured to control not to output a sound output from the window into which the lock command has been input if it is determined that the lock command has been input.

According to various embodiments of the present disclosure, a display device which can display windows individually in a locked state instead of displaying an entire screen in a locked state and a method of controlling the same are provided. Accordingly, a user may display only a window which is not to be used by another user in a locked state, so that the user's privacy can be protected. Further, the user may create an effect of maximizing the user's convenience by displaying a window in a locked state through only an input of a simple gesture.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram schematically illustrating a device according to an embodiment of the present disclosure;
FIG. 2A is a perspective view of a device according to an embodiment of the present disclosure;
FIG. 2B illustrates a concept describing a framework according to the present disclosure;
FIG. 3 is a flowchart describing a method of controlling a display device according to an embodiment of the present disclosure;
FIGS. 4A, 4B, 4C, 4D, 4E, and 4F illustrate concepts of a display device describing the method of controlling a display device according to an embodiment of the present disclosure;
FIGS. 5A, 5B, 5C, 5D, 5E, and 5F illustrate concepts describing examples of a split mode, not a freestyle mode according to an embodiment of the present disclosure;
FIG. 6 illustrates a method of controlling a display device according to an embodiment of the present disclosure;
FIGS. 7A, 7B, 7C, and 7D illustrate concepts of a display device for describing the method of controlling a display device according to an embodiment of the present disclosure;
FIGS. 8A, 8B, 8C, 8D, and 8E illustrate concepts describing a lock command and an unlock command according to another embodiment of the present disclosure;
FIGS. 9A, 9B, 9C, and 9D illustrate concepts describing an unlock command according to another embodiment of the present disclosure;
FIGS. 10A, 10B, 10C, 10D, and 10E illustrate concepts describing a lock screen according to another embodiment of the present disclosure;
FIGS. 11A, 11B, 11C, 11D, and 11E illustrate concepts describing a method of controlling a display device according to another embodiment of the present disclosure;
FIGS. 12A, 12B, 12C, 12D, and 12E illustrate concepts describing a method of controlling a display device according to another embodiment of the present disclosure;
FIGS. 13A, 13B, 13C, and 13D illustrate concepts of a display device according to another embodiment of the present disclosure; and
FIGS. 14A, 14B, and 14C illustrate concepts of a display device according to another embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

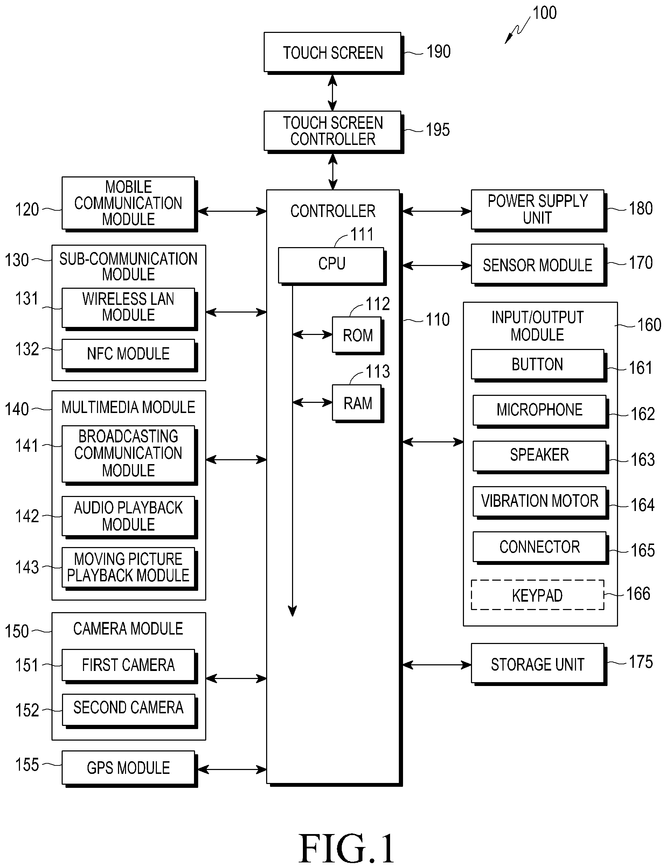

FIG. 1 is a block diagram schematically illustrating a device according to an embodiment of the present disclosure.

Referring to FIG. 1, a display device 100 may be connected to an external device (not shown) by using a mobile communication module 120, a sub communication module 130, and a connector 165. The external device may be any different device (not shown) from the display device 100, such as a mobile phone (not shown), a smart phone (not shown), a tablet Personal Computer (PC) (not shown), a server (not shown), or any other similar and/or suitable external device that may be connected to the display device 100.

Referring to FIG. 1, the display device 100 includes a touch screen 190 and a touch screen controller 195. Also, the display device 100 includes a controller 110, the mobile communication module 120, the sub communication module 130, a multimedia module 140, a camera module 150, a GPS module 155, an input/output module 160, a sensor module 170, a storage unit 175, and a power supply unit 180. The sub communication module 130 includes at least one of a wireless Local Area Network (LAN) module 131 and a Near Field Communication (NFC) module 132, and the multimedia module 140 includes at least one of a broadcasting communication module 141, an audio playback module 142, and a moving picture playback module 143. The camera module 150 includes at least one of a first camera 151 and a second camera 152, and the input/output module 160 includes at least one of a button 161, a microphone 162, a speaker 163, a vibration motor 164, the connector 165, and a keypad 166.

The controller 110 may include a Central Processing Unit (CPU) 111, a Read Only Memory (ROM) 112 for storing a control program for controlling the display device 100, and a Random Access Memory (RAM) 113 for storing a signal and/or data input from an outside of the display device 100 and/or the RAM 113 may be used as a storage area for an operation performed in the display device 100. The CPU 111 may include a single core, a dual core, a triple core, a quad core, or any suitable architecture for a processor. The CPU 111, the ROM 112, and the RAM 113 may be mutually connected through an internal bus. The CPU 111 may be any suitable hardware element, such as a processor, a microprocessor, a controller, a microcontroller, an Integrated Circuit (IC), an Application Specific IC, an Erasable Programmable Read Only Memory (EPROM), or any other similar and/or suitable hardware element.

The controller 110 may control the mobile communication module 120, the sub communication module 130, the multimedia module 140, the camera module 150, the GPS module 155, the input/output module 160, the sensor module 170, the storage unit 175, the power supply unit 180, a first touch screen 190a, a second touch screen 190b, the touch screen controller 195, and any other elements of the display device 100 shown and/or not shown in FIG. 1.

The mobile communication module 120 connects the display device 100 with the external device through mobile communication by using at least one or a plurality of antennas (not shown) according to a control of the controller 110. The mobile communication module 120 transmits and/or receives a wireless signal for voice phone communication, video phone communication, a Short Message Service (SMS), a Multimedia Message service (MMS) to/from a mobile phone (not shown), a smart phone (not shown), a tablet PC, or another device (not shown) having a phone number input into the display device 100, or any other similar and/or suitable wireless signal.

The sub communication module 130 may include at least one of the wireless LAN module 131 and the NFC module 132. For example, the sub communication module 130 may include only the wireless LAN module 131, only the NFC module 132, or both the wireless LAN module 131 and the NFC module 132. However, the present disclosure is not limited thereto, and the sub communication module may include other modules used for communication.

The wireless LAN module 131 may be connected to an Internet in a place where a wireless Access Point (AP) (not shown) is installed, according to a control of the controller 110. The wireless LAN module 131 supports a wireless LAN standard, such as any of Institute of Electrical and Electronics Engineers (IEEE) 802.11x standards, or any other similar or suitable standard. The NFC module 132 may wirelessly perform NFC between the display device 100 and a video forming device (not shown) according to a control of the controller 110. NFC techniques may include Bluetooth, Infrared Data Association (IrDA) and the like.

The display device 100 may include at least one of the mobile communication module 120, the wireless LAN module 131, and the NFC module 132. For example, the display device 100 may include a combination of the mobile communication module 120, the wireless LAN module 131, and the NFC module 132 according to a capability of the display device 100.

The multimedia module 140 may include the broadcasting communication module 141, the audio playback module 142, and the moving picture playback module 143. The broadcasting communication module 141 may receive a broadcasting signal, for example, a TV broadcasting signal, a radio broadcasting signal, a data broadcasting signal, or any other similar and/or suitable broadcasting signal, and additional broadcasting information, for example, an Electric Program Guide (EPG) or an Electric Service Guide (ESG)) broadcasted from a broadcasting station through a broadcasting communication antenna (not shown) according to a control of the controller 110. The audio playback module 142 may reproduce a digital audio file, for example, a file having an extension of mp3, wma, ogg, wav, or any other similar and/or suitable audio file extension type, stored and/or received according to a control of the controller 110. The moving picture playback module 143 may reproduce a digital video file, for example, a file having an extension of mpeg, mpg, mp4, avi, mov, mkv, or any other similar and/or suitable video file extension type, stored and/or received according to a control of the controller 110. The moving picture playback module 143 may reproduce the digital audio file.

The multimedia module 140 may include the audio playback module 142 and the moving picture playback module 143 except for the broadcasting communication module 141. Further, the audio playback module 142 or the moving picture playback module 143 of the multimedia module 140 may be included in the controller 110.

The camera module 150 may include at least one of the first camera 151 and the second camera 152 for photographing a still image and/or a video according to a control of the controller 110. Further, the first camera 151 or the second camera 152 may include an auxiliary light source, for example, a flash (not shown), for providing an amount of light needed for the photographing. The first camera 151 may be disposed in a front surface of the display device 100, and the second camera 152 may be disposed in a rear surface of the display device 100. In a different way, the first camera 151 and the second camera 152 may be disposed to be adjacent to each other on a same surface, for example, an interval between the first camera 151 and the second camera 152 is larger than 1 cm or smaller than 8 cm, and thus a three-dimensional still image and/or a three-dimensional video may be photographed.

The GPS module 155 may receive a radio wave from a plurality of GPS satellites (not shown) in Earth orbit and may calculate a position of the display device 100 by using a Time of Arrival value from the GPS satellites (not shown) to the display device 100.

The input/output module 160 may include at least one of the plurality of buttons 161, the microphone 162, the speaker 163, the vibration motor 164, the connector 165, and the keypad 166.

The buttons 161 may be formed in a front surface, a side surface, and/or a rear surface of the housing of the display device 100, and may include at least one of a power/lock button (not shown), a volume button (not shown), a menu button, a home button, a back button, a search button, and any other similar and/or suitable button type.

The microphone 162 receives a voice or a sound and generates an electrical signal according to a control of the controller 110.

The speaker 163 may output sounds corresponding to various signals, for example, a wireless signal, a broadcasting signal, a digital audio file, a digital video file, photographing a picture or the like, of the mobile communication module 120, the sub communication module 130, the multimedia module 140, or the camera module 150, to an outside of the display device 100 according to a control of the controller 110. The speaker 163 may output sounds, for example, a button control sound, a ring back tone corresponding to phone communication, or any other similar and/or suitable sound corresponding to functions performed by the display device 100. One or more speakers 163 may be formed in a position or positions of the housing of the display device 100.

The vibration motor 164 may convert an electrical signal into a mechanical vibration according to a control of the controller 110. For example, when the display device 100, which is in a vibration mode, receives voice phone communication from another device (not shown), the vibration motor 164 operates so as to generate the mechanical vibration. One or more vibration motors 164 may be formed within the housing of the display device 100. The vibration motor 164 may operate in response to a touch action of the user on the touch screen 190 and continuous motions of the touch on the touch screen 190 or may operate for any suitable and/or similar reason.

The connector 165 may be used as an interface for connecting the display device 100 with an external device (not shown) or a power source (not shown). The connector 165 may transmit data stored in the storage unit 175 of the display device 100 to the external device through a wired cable connected to the connector 165 or receive the data from the external device according to a control of the controller 110. Power may be input or a battery (not shown) may be charged from the power source through the wired cable connected to the connector 165.

The keypad 166 may receive a key input from the user to control the display device 100. The keypad 166 includes a physical keypad (not shown) formed in the display device 100 and/or a virtual keypad (not shown) displayed on the touch screen 190. The physical keypad formed in the display device 100 may be omitted according to a capability or a structure of the display device 100.

The sensor module 170 includes at least one sensor for detecting a state of the display device 100. For example, the sensor module 170 may include a proximity sensor for detecting whether the user is close to the display device 100, and/or detecting whether the user is proximate to, without touching, the display device 100, an illumination sensor (not shown) for detecting an amount of light adjacent to the display device 100, or a motion sensor (not shown) for detecting an operation of the display device 100, for example, a rotation of the display device 100, or an acceleration or vibration applied to the display device 100. At least one sensor may detect a state of and/or an input to the display device 100, generate a signal corresponding to the detection, and transmit the generated signal to the controller 110. The sensor of the sensor module 170 may be added or omitted according to a capability of the display device 100.

The storage unit 175 may store signals or data input/output in accordance with operations of the mobile communication module 120, the sub communication module 130, the multimedia module 140, the camera module 150, the GPS module 155, the input/output module 160, the sensor module 170, and the touch screen 190 according to a control of the controller 110. The storage unit 175 may store a control program for controlling the display device 100 or the controller 110 and applications and may store any other similar and/or suitable information for controlling and/or operating the display device 100.

The term storage unit may refer to a memory card (not shown), for example, a Secure Digital (SD) card, a memory stick, or any other similar and/or suitable memory card mounted to the storage unit 175, the ROM 112 or the RAM 113 within the controller 110, or the display device 100. The storage unit may include a nonvolatile memory, a volatile memory, a Hard Disk Drive (HDD), a Solid State Drive (SSD), or any other similar and/or suitable device for storing information.

The power supply unit 180 may supply power to one battery or a plurality of batteries (not shown) disposed in the housing of the display device 100 according to a control of the controller 110. The one battery or the plurality of batteries may supply power to the display device 100. Further, the power supply unit 180 may supply power input from an external power source (not shown) through the wired cable connected to the connector 165 to the display device 100.

The touch screen 190 may include any suitable hardware element of a display unit, such as an Organic Light Emitting Diode (OLED) display unit, a Liquid Crystal Display (LCD) unit, a Thin-Film Transistor (TFT) display unit, or any other similar and/or suitable display unit type. The touch screen 190 may provide a user interface corresponding to various services, for example, phone communication, data transmission, broadcasting, and photographing a picture, to the user. The touch screen 190 may transmit an analog signal corresponding to at least one touch input into the user interface to the touch screen controller 195. The touch screen 190 may receive at least one touch through a body part of the user, for example, fingers including a thumb, or a touchable input means. Also, the touch screen 190 may receive a continuous motion of one touch among at least one touch. The touch screen 190 may transmit an analog signal corresponding to the continuous motion of the input touch to the touch screen controller 195.

The touch, according to the present disclosure, is not limited to a touch between the touch screen 190 and a body part of the user or a touchable input device and/or unit, but may include a non-touch, for example, a case where a detectable interval between the touch screen 190 and the body part of the user or the touchable input device and/or unit is equal to or smaller than a distance of 1 mm, or any other similar and/or suitable distance. The detectable interval of the touch screen 190 may be changed according to a capability of a structure of the display device 100.

The touch screen 190 may be implemented in, for example, a resistive type, a capacitive type, an infrared type, an acoustic wave type, or any other similar and/or suitable type for a touch screen detecting a touch input.

The touch screen controller 195 converts the analog signal received from the touch screen 190 to a digital signal, for example, X and Y coordinates, and transmits the digital signal to the controller 110. The controller 110 may control the touch screen 190 by using the digital signal received from the touch screen controller 195. For example, the controller 110 may allow a shortcut icon (not shown) displayed on the touch screen 190 to be selected or executed in response to the touch. Further, the touch screen controller 195 may be included in the controller 110.

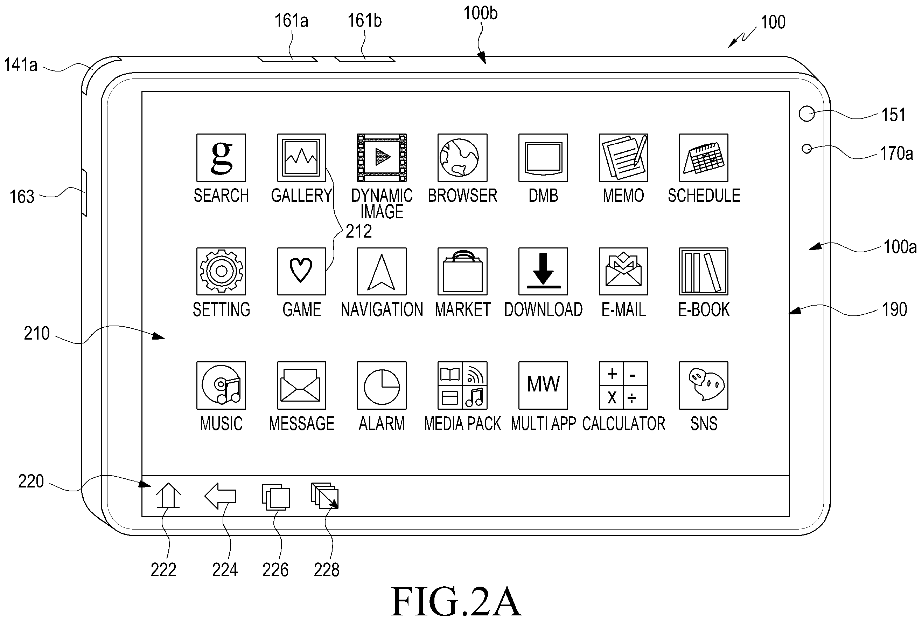

FIG. 2A is a perspective view of the device according to an embodiment of the present disclosure.

Referring to FIG. 2A, the touch screen 190 is disposed in a center of a front surface 100a of the display device 100. The touch screen 190 has a large size to almost cover an entirety of the front surface 100a of the display device 100. The first camera 151 and an illumination sensor 170a may be disposed in an edge of the front surface 100a of the display device 100. For example, a power/reset button 160a, a volume button 161b, the speaker 163, a terrestrial Digital Multimedia Broadcast (DMB) antenna 141a for receiving a broadcast, the microphone 162 (see FIG. 1), the connector 165 (see FIG. 1), and the like may be disposed on the side surface 100b of the display device 100, and the second camera 152 (see FIG. 1) may be disposed on the rear surface (not shown) of the display device 100.

The touch screen 190 includes a main screen 210 and a lower bar 220. In FIG. 2A, the display device 100 and the touch screen 190 have a horizontal length larger than a vertical length. In this case, the touch screen 190 is considered to be horizontally arranged.

The main screen 210 is an area where one application or a plurality of applications are executed. FIG. 2A shows an example where a home screen is displayed on the touch screen. 190. The home screen is a first screen displayed on the touch screen 190 when the display device 100 is turned on. Execution keys 212 for executing a plurality of applications stored in the display device 100 are arranged on the home screen in rows and columns. The execution keys 212 may be formed as icons, buttons, texts or the like. When any one of the execution keys 212 is touched, an application corresponding to the touched execution key 212 is executed and then displayed on the main screen 210.

The lower bar 220 is elongated to be long in a horizontal direction in a lower end of the touch screen 190 and includes standard function buttons 222, 224, 226, and 228. A home screen movement button 228 makes the home screen displayed on the main screen 210. For example, when the home screen movement key 228 is touched while applications are executed on the main screen 210, then the home screen, as illustrated in FIG. 2A, is displayed on the main screen 210. A back button 224 may display a screen executed just before a currently executed screen or terminate an application most recently used. A multi view mode button 226 displays a plurality of applications on the main screen 210 in a multi view mode according to the present disclosure. A mode switching button 222 switches modes of a plurality of currently executed applications to different modes and displays them on the main screen 210. For example, when the mode switching button 222 is touched, a switching is performed between a freestyle mode, in which a plurality of applications are freely displayed in the same position so as to partially overlap each other, and a split mode, in which the plurality of applications are displayed separately in different areas on the main screen 210.

Further, an upper bar (not shown) for displaying a state of the display device 100, such as a charging state of a battery, an intensity of a received signal, and a current time, may be formed in an upper end of the touch screen 190.

Meanwhile, a lower bar 220 and the upper bar may be omitted on the touch screen 190 according to an Operating System (OS) of the display device 100 or an application executed in the display device 100. When both the lower bar 220 and the upper bar are not displayed on the touch screen 190, then the main screen 210 may be formed on an entire area of the touch screen 190. Further, the lower bar 220 and the upper bar may be translucently displayed on the main screen 210 while overlapping each other.

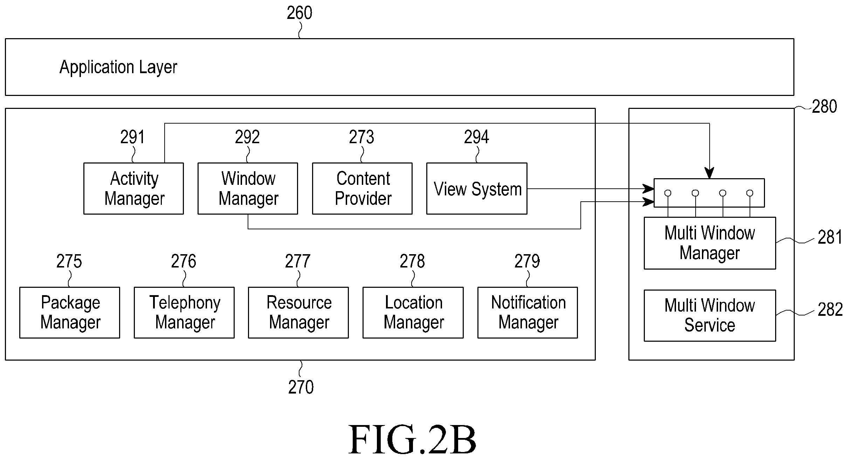

FIG. 2B illustrates a concept describing a framework according to an embodiment of the present disclosure.

Referring to FIG. 2B, in a framework 270, an activity manager 291, a window manager 292, and a view system 294 are compatible with a multi window framework 280. The compatibility with the multi window framework 280 may include, for example, an Application Program Interface (API) loading or the like.

The multi window framework 280 includes a multi window manager 281 and a multi window service 282. The activity manager 291, the window manager 292, and the view system 294 can perform a function of loading APIs (not shown) for the multi window. Meanwhile, more specifically, the window manager 292 can generate a title bar of each window. The multi window manager 281 may provide a function of the multi window service 282 in an API form to a user, and a manager/service structure may operate based on an IPC. The multi window service 282 traces lifecycles of applications executed through the multi window and manages a state of each application such as a size, a position and the like.

The loaded API can manage a size, a position, and visibility of each window. As described above, the framework according to the present disclosure may be operated in a way of providing an independent multi window framework to load the API. Also, an application layer 260 may directly load the API from the multi window manager 281. That is, even when developing a new application, the user may receive an API provided from the multi window manager 281 to use the received API. As described above, the present disclosure may adopt the multi window framework 280 and simultaneously display two or more applications.

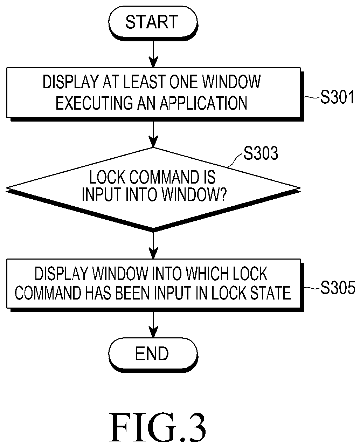

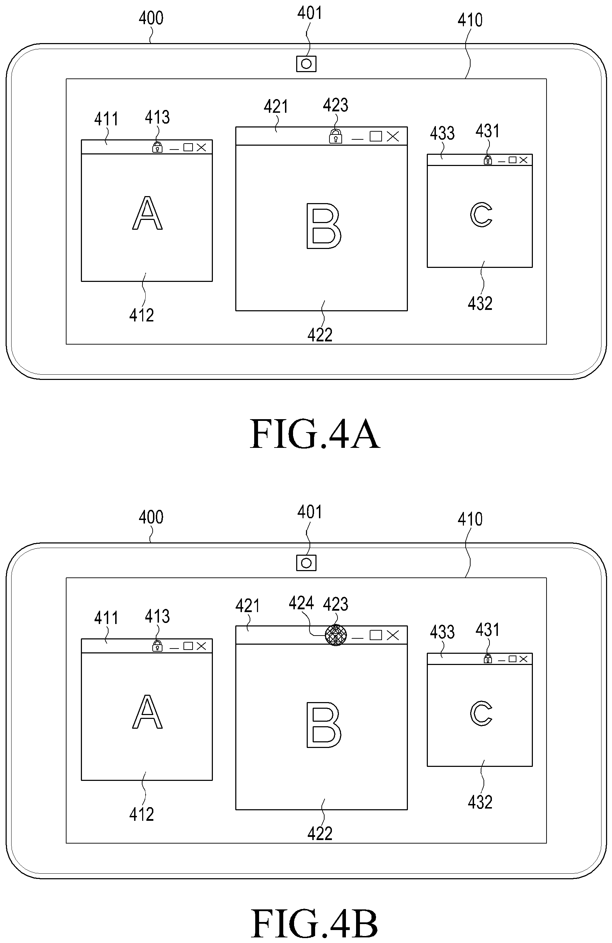

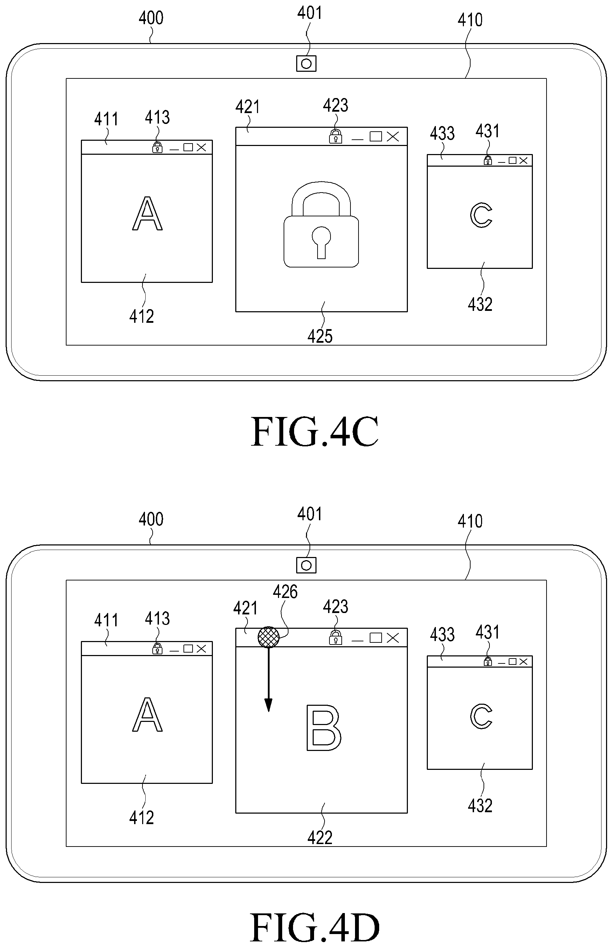

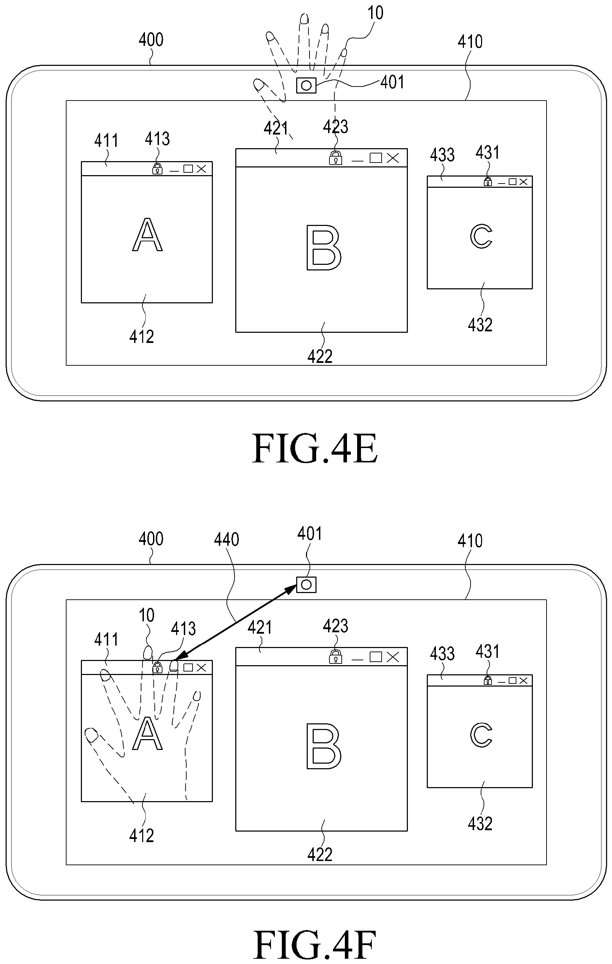

FIG. 3 is a flowchart describing a method of controlling the display device according to an embodiment of the present disclosure; and FIGS. 4A, 4B, 4C, 4D, 4E, and 4F illustrate concepts of a display device describing the method of controlling a display device according to an embodiment of the present disclosure.

Referring to FIG. 3, the method of controlling the display device of FIG. 3 will be described with reference to concepts illustrated in FIGS. 4A to 4F.

The display device can display at least one window executing each application on a touch screen in operation S301. FIG. 4A illustrates a concept of a screen displayed in operation S301 according to an embodiment of the present disclosure.

Referring to FIG. 4A, a first window may include a first title bar 411 and a first application execution screen 412, a second window may include a second title bar 421 and a second application execution screen 422, and a third window may include a third title bar 433 and a third application execution screen 432, and at least one of the first window, the second window and the third window may be displayed on a touch screen 410 of the a display device 400.

A window, such as any one of the first through third windows, may be an area including an execution screen of a particular application and a title bar and a control area of an executed application. Objects related to the application may be displayed on the application execution screen. The objects may have various shapes such as a text, a symbol, an icon, a button, a checkbox, a picture, a video, a web, a map and the like. When the user touches the object, a function or an event predetermined for the object may be executed in a corresponding application. The object may be referred to as a view according to an operating system. The title bar may include at least one control key for controlling a display of the window. For example, the control key may be a window display minimizing button, a window display maximizing button, a window end button, or any other similar and/or suitable button.

Meanwhile, applications are programs independently implemented by a manufacturer of the display device 400 or an application developer. Accordingly, a pre-execution of one application is not needed in order to execute another application. Further, although one application ends, another application may be continuously executed.

The applications are distinguished from a complex function application or dual application generated by adding some functions, such as a memo function and a message transmission and/or reception function, provided by another application to functions of one application in that the applications are independently implemented programs. However, the complex function application is a single application newly produced to have various functions, and thus has differences from conventional applications. Accordingly, the complex function application provides only limited functions without providing various functions, unlike the conventional applications. Further, users have the burden of separately purchasing such a new complex function application.

Meanwhile, the first window, the second window, and the third window may be displayed on limitless positions with different sizes in a freestyle mode. Although not illustrated, the first window, the second window, and the third window may overlap each other.

The first title bar 411 may include at least one control key that controls a display of the first window. For example, the control key may be a first window display minimizing button, a first window display maximizing button, and a first window end button.

Meanwhile, the display device 400 controls to further display a first lock control button 413 on the first title bar 411 of the touch screen 410. The first lock control button 413 may be a button designated for a lock display command or a lock display release command of the first window. More specifically, the window manager 292 or the multi window manager 281 of FIG. 2B may, respectively display the first lock control button 413, a second lock control button 423, and a third lock control button 431 on the first title bar 411, the second title bar 421, and the third title bar 433, respectively.

Meanwhile, the display device 400 further includes a front camera module 401, which will be described below in detail.

Referring back to FIG. 3, after the step of displaying the at least one window executing the application in operation S301, the display device 400 determines whether a lock command is input into a particular window of the at least one window in operation S303.

FIG. 4B illustrates a concept of the screen displayed in operation S303 according to an embodiment of the present disclosure.

Referring to FIG. 4B, a lock command for a particular window, for example, the second window, may be a gesture of touching the second lock control button 423, as indicated by a reference numeral 424.

Referring back to FIG. 3, when it is determined that the lock command is input, in operation S303, then the display device 400 displays only the window into which the lock command is input in a locked state in operation S305.

FIG. 4C illustrates a concept displaying only the second window 421 and 422 into which the lock command is input in a locked state according to an embodiment of the present disclosure.

Referring to FIG. 4C, a second lock display screen 425 may be replaced with another screen by which the second application execution screen 422 cannot be identified. When the window is displayed in the locked state, a controller (not shown) may not process a gesture input into the window. For example, the controller may control to generate a dummy view (not shown) on the second lock display screen 425 and control to dispatch the gesture input into the second lock display screen 425 to the dummy view. Accordingly, even though another user inputs a predetermined gesture into the second lock display screen 425, the controller can control a command corresponding to the gesture not to be input into the second application.

Another user can use a first application and a third application, into which the lock command has not been input. However, another user cannot use the second application, into which the lock command has been input, and which is then displayed in the locked state.

FIGS. 4D to 4F describe a lock command according to various embodiments of the present disclosure.

Referring to FIG. 4D, a concept describing a process of displaying the second window in the locked state is illustrated. In an embodiment of FIG. 4D, a lock command may be a drag input 426 performed downwardly from the second title bar 421. More specifically, the lock command may be a drag input performed downwardly from the second title bar 421 with a distance larger than or equal to a preset distance. The preset distance is changeable. The downward drag input may be a gesture of closing the window to be displayed in the locked state, which matches a user's intuition. However, the present disclosure is not limited thereto, and any suitable and/or similar gesture may be for the lock command.

The controller may recognize the drag input 426 downwardly performed from the second title bar 421 as a lock command, and accordingly, may control to replace the second application screen 422 with the second lock screen 425 and display the replaced second lock screen 425 as illustrated in FIG. 4C.

Referring to FIG. 4E, a concept describing a process of displaying the second window 421 and 422 in a locked state is illustrated. In an embodiment of FIG. 4E, a lock command may be a gesture, by a user 10, of covering the camera module 401. When the user 10 covers the camera module 401, a light amount incident to the camera module 401 may become smaller than or equal to a threshold and the controller may recognize the gesture of covering the camera module 401. The controller may determine that the user has input a lock command based on the recognized gesture.

The controller may control to display a window having a highest task order in a locked state. The task order may refer to an order in a task stack, and a high task order may be assigned to an application into which a control event is most recently input. In an embodiment of FIG. 4E, it is assumed that the second application has a highest task order.

The controller may determine the gesture of covering the camera module 401 to be the lock command, and accordingly, may control to replace the second application screen 422 with the second lock screen 425 and may display the replaced second lock screen 425, as illustrated in FIG. 4C.

FIG. 4F illustrates a concept describing a process of displaying the second window according to another embodiment of the present disclosure in a locked state. In an embodiment of FIG. 4F, the lock command may be a gesture of covering a particular window, and it is assumed herein that the lock command is a gesture of covering the first window.

Referring to FIG. 4F, when the user 10 covers the first window, the camera module 401 may photograph the gesture of covering the first window, as indicated by a reference numeral 440. The controller may recognize that the user 10 has covered the first window based on photographing information and may determine that the user 10 has input the lock command based on the recognized gesture. In order to distinguish the gesture of the lock command from a gesture of commonly covering the window, the controller may determine a gesture of covering a particular window for a preset time to be the lock command.

Meanwhile, determining input of the lock command based on the photographing information is only an example, and the controller may determine that the first window is covered by a touch of a user's palm. For example, the controller may identify a touch on an area larger than or equal to a preset area of the first window, and accordingly determine that the user 10 has covered the first window by the palm touch. The controller controls to replace the first application screen 412 into which the lock command is input with a lock screen and displays the replaced lock screen.

As described above, the display device, according to the present disclosure, may receive the lock command in various ways. Further, the display device controls to display only a window into which the lock command is input in a locked state, thereby creating an effect of allowing the remaining windows to be continuously used. However, the locked state of the application does not refer to a stopped state of the application. The locked state may be at least one of a resumed state and a stopped state according to a type or a characteristic of the application. For example, while the locked state may refer to the resumed state in which a music play may continue in the case of a media player, the locked state may also refer to the stopped state in which a video play stops in the case of a video player.

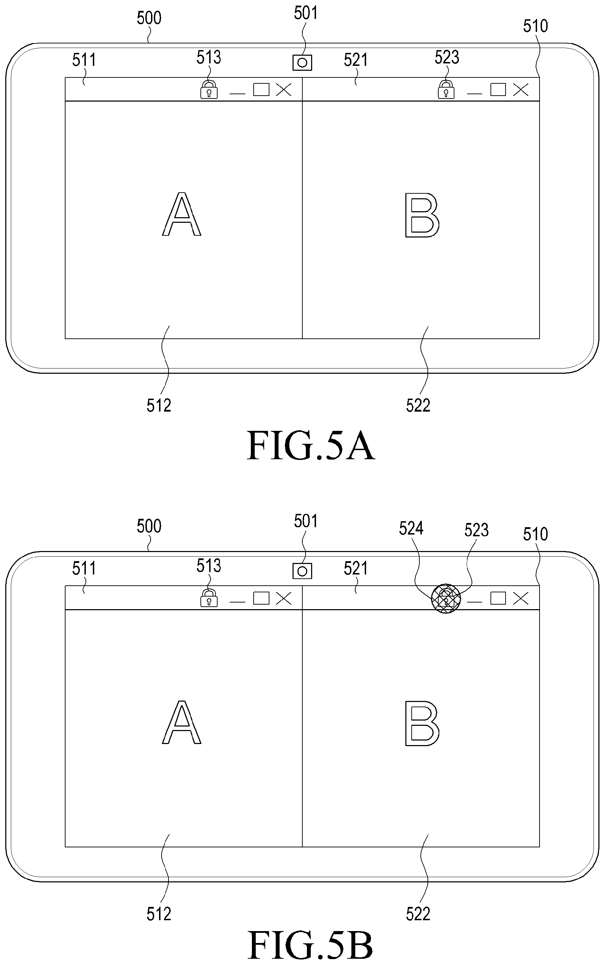

FIGS. 5A and 5B illustrate examples of a split mode, not a freestyle mode according to an embodiment of the present disclosure.

Referring to FIG. 5A, a concept of a screen displayed in operation S301 of FIG. 3 is illustrated. As illustrated in FIG. 5A, a first window may include a first title bar 511 and a first application execution screen 512, and a second window may include a second title bar 521 and a second application execution screen 522, and the first window and the second window may be displayed on a touchscreen 510 of a display device 500. Meanwhile, in contrast to FIG. 4A, the first window and the second window do not overlap each other while sharing a boundary. For example, the first window may be displayed on the left half of the entirety of the touch screen 510, and the second window may be displayed on the right half of the entirety of the touch screen 510.

The first title bar 511 may include at least one control key controlling a display of the first window. For example, the control key may be a first window display minimizing button, a first window display maximizing button, and a first window end button.

Meanwhile, the display device 500 controls to further display a first lock control button 513 on the first title bar 511 of the touch screen 510. The display device 500 further includes a front camera module 501, which will be described below in more detail.

In an embodiment of FIG. 5B, a lock command for a particular window, for example, the second window, may be a gesture of touching a second lock control button 523, as indicated by a reference numeral 524.

When it is determined that the lock command is input, then the display device 500 displays only a window into which the lock command has been input in a locked state.

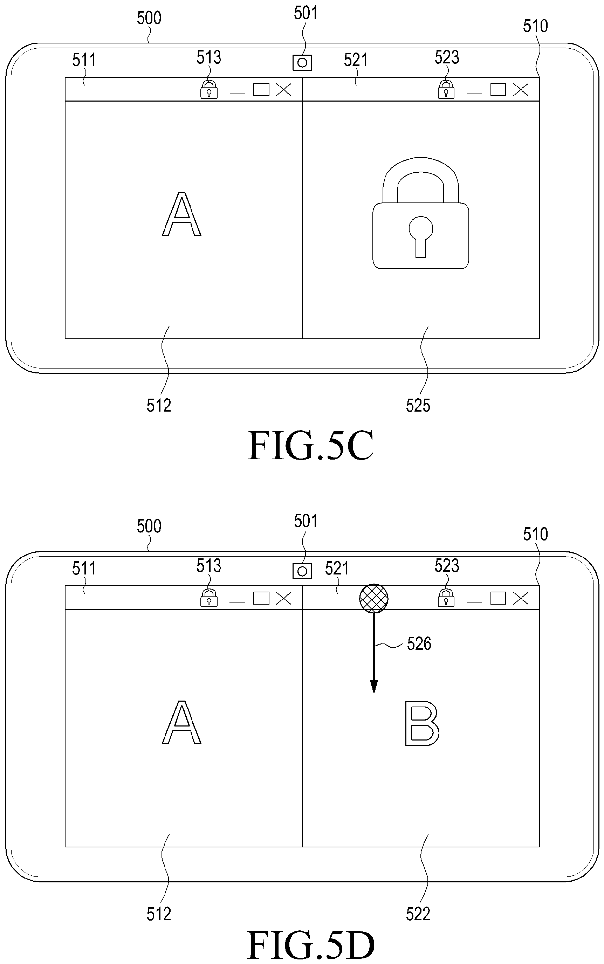

FIG. 5C illustrates a concept displaying only the second window into which the lock command has been input in the locked state according to an embodiment of the present disclosure.

Referring to FIG. 5C, the second application execution screen 522 may be replaced with the second lock display screen 525 by which the second application execution screen 522 cannot be identified. The second lock screen may have a color or brightness different from that of the second application execution screen 522. Alternatively, the second lock screen may include a view having a lock shape in a center thereof or any similar and/or suitable view that prevents the second application execution screen 522 from being visible.

Another user can use a first application into which the lock command has not been input. However, the other user cannot use the second application into which the lock command has been input and which has been displayed in the locked state.

FIGS. 5D to 5F describe a lock command according to various embodiments of the present disclosure.

Referring to FIG. 5D, a concept describing a process of displaying the second window in the locked state is illustrated. In an embodiment of FIG. 5D, the lock command may be a drag input 526 downwardly performed from the second title bar 521. More specifically, the lock command may be a drag input performed downwardly from the second title bar 521, the drag input having a distance larger than or equal to a preset distance. The preset distance is changeable.

The controller (not shown) may determine that the drag input 526 has been downwardly performed from the second title bar 521 as the lock command, and accordingly, control to replace the second application screen 522 with the second lock screen 525 and display the replaced second lock screen 525, as illustrated in FIG. 5C.

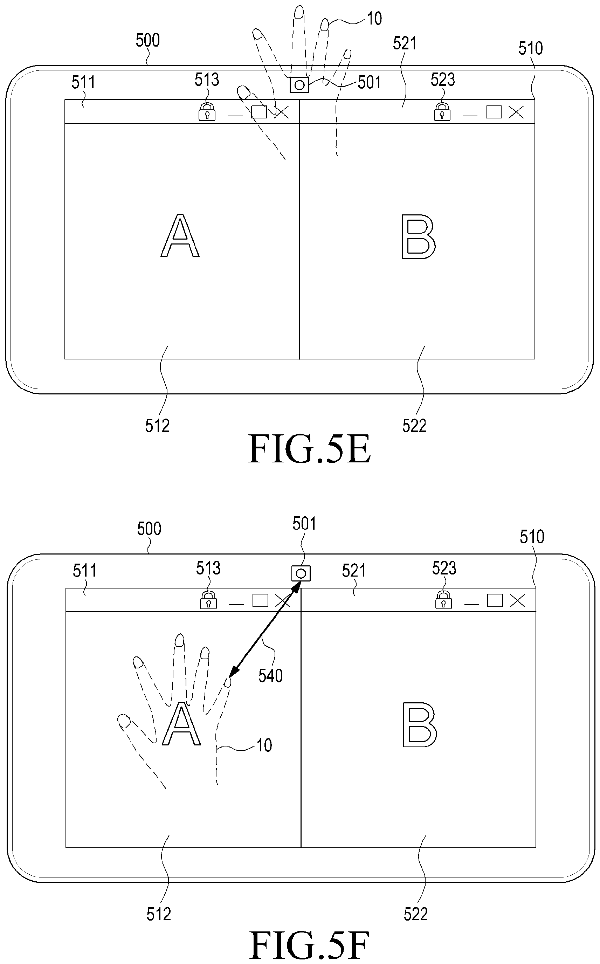

FIG. 5E illustrates a concept describing a process of displaying the second window in the locked state according to another embodiment of the present disclosure.

Referring to FIG. 5E, the lock command may be a gesture of covering the camera module 501. When the user 10 covers the camera module 501, an amount of light incident to the camera module 501 may become smaller than or equal to a threshold and the controller (not shown) may recognize the gesture of covering the camera module 501 by the user 10. The controller may determine that the user has input the lock command based on the recognized gesture.

The controller controls to display a window having a highest task order in the locked state. In an embodiment of FIG. 5E, it is assumed that the second application has a highest task order.

The controller may determine the gesture of covering the camera module 501 to be the lock command, and accordingly, control to replace the second application screen 522 with the second lock screen 525 and display the replaced second lock screen 525, as illustrated in FIG. 5C.

FIG. 5F illustrates a concept describing a process of displaying the second window according to another embodiment of the present disclosure in the locked state.

Referring to FIG. 5F, the lock command may be a gesture of covering a particular window, and it is assumed herein that the lock command is a gesture of covering the first window.

As illustrated in FIG. 5F, when the user 10 covers the first window, the camera module 501 may photograph the gesture of covering the first window, as indicated by a reference numeral 540. The controller (not shown) may determine that the user 10 has covered the first window based on photographing information and may identify that the user has input the lock command based on the recognized gesture. For example, the controller may determine a gesture of placing a user's palm on a part corresponding to a left side of the touch screen 510 for a preset time or longer to be the lock command.

Meanwhile, determining input of the lock command based on the photographing information is only an example, and the controller may determine that the first window is covered by a touch of the user's palm, or by any similar and/or suitable determination. Inputting the lock command by the palm touch will be described below in more detail.

The controller controls to replace the first application screen 512 into which the lock command has been input with a lock screen (not shown) and displays the replaced lock screen.

As described above, the display device, according to the present disclosure, may receive the lock command in various ways, even in the split mode as well as in the freestyle mode. The display device controls to display only a window into which the lock command has been input in a locked state, thereby creating an effect of allowing the remaining windows to be continuously used.

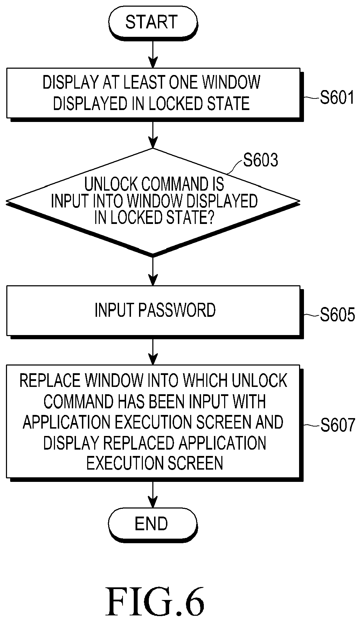

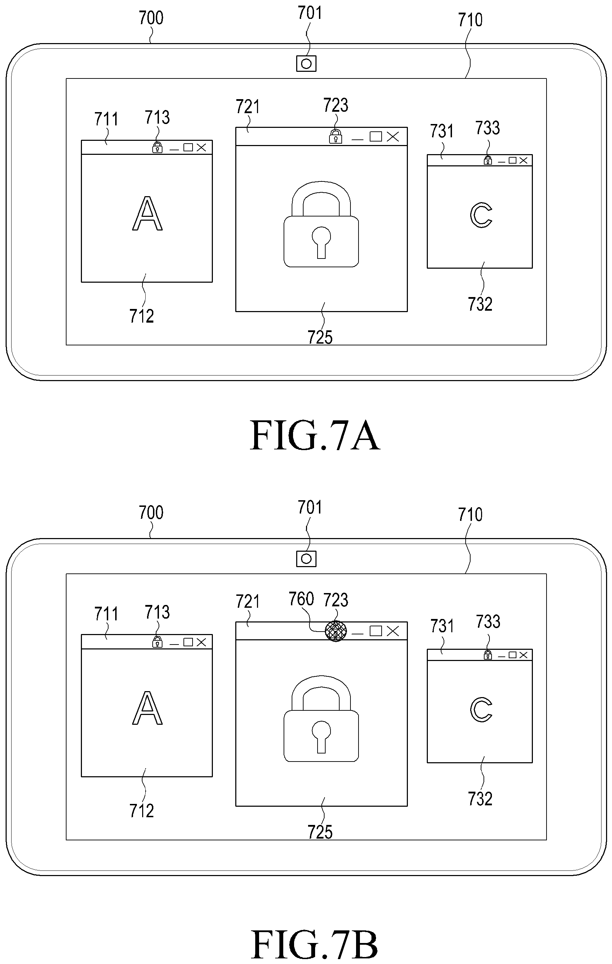

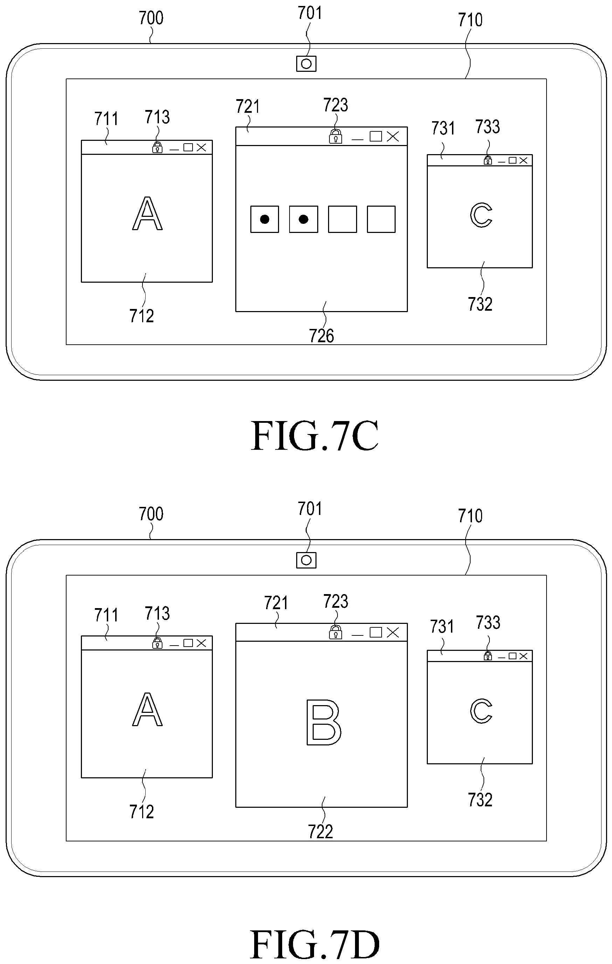

FIG. 6 is a flowchart illustrating a method of controlling the display device according to an embodiment of the present disclosure; and FIGS. 7A, 7B, 7C, and 7D illustrate concepts of a display device for describing the method of controlling a display device according to an embodiment of the present disclosure.

Referring to FIG. 6 and FIGS. 7A, 7B, 7C, and 7D, a process of unlocking a window displayed in a locked state will be described. The control method of FIG. 6 will be described with reference to FIGS. 7A to 7D.

The display device displays at least one window displayed in a locked state in operation S601. As illustrated in FIG. 7A, a first window may include a first title bar 711 and a first application execution screen 712, a second window may include a second title bar 721 and a second lock screen 725, and a third window may include a third title bar 731 and a third application execution screen 732, displayed on a touch screen 710 of a display device 700, and the display device 700 may include a front camera module 701. That is, the user can input a lock command for the second window before the screen of FIG. 7A is displayed. In response to the lock command, the display device 700 replaces a second application execution screen (not shown) with the second lock screen 725 and displays the replaced second lock screen 725. Meanwhile, a first lock control button 713 is displayed on the first title bar 711, a second lock control button 723 is displayed on the second title bar 721, and a third lock control button 733 is displayed on the third title bar 731.

Referring back to FIG. 6, the controller can determine whether an unlock command has been input into the window displayed in a locked state in operation S603. In FIG. 7A, the unlock command may be a gesture of touching a lock control button of the window displayed in the locked state. As illustrated in FIG. 7A, when the second lock control button 723 of the second title bar 721 is touched, then the controller (not shown) may determine that the unlock command has been input.

Referring back to FIG. 6, when the unlock command is input into the window displayed in the locked state in operation S603, then the display device may receive a password that is input in operation S605. More specifically, the display device may provide a screen into which the password can be input and may receive the password through the provided screen.

FIG. 7C illustrates a concept of a password input screen into which a password can be input according to an embodiment of the present disclosure.

Referring to FIG. 7C, a password input screen 726 includes four input spaces meaning that the password consists of four digits. However, the present disclosure is no limited thereto, and the password input screen 726 may have any suitable configuration for inputting any suitable type of password. The user can input the password by inputting four digits. However, the password input screen 726 is only an example, and a keypad interface through which numbers are touched may be further included. Further, the password consisting of four digits is only an example, and the password may consist of a combination of limitless characters/digits. In this case, the password input screen 726 may further include a keyboard interface instead of the keypad interface.

The controller (not shown) compares an input password with a preset password, and may replace the second lock screen 725 with the second application screen 722 and display the replaced the second application screen 722 according to a result of the comparison. Meanwhile, the controller may control to display an initial application screen by restarting the second application screen 722. Alternatively, the controller may control to store an application execution state at the time when the lock command is input. When an unlock command is input, the controller may restart the application screen with the application execution state at the time when the lock command is input. Alternatively, the controller may control not to display the execution state while maintaining the application execution even though the lock command is input. In this case, when the unlock command is input, the controller may control to display the execution state.

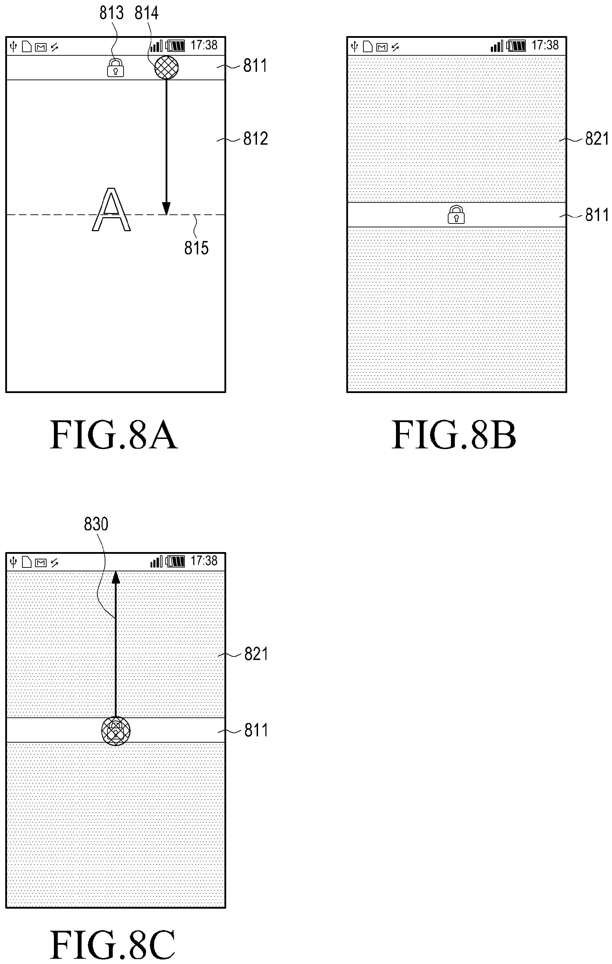

FIGS. 8A to 8E illustrate concepts describing a lock command and an unlock command according to another embodiment of the present disclosure.

Referring to FIG. 8A, a window may include a title bar 811 and an application execution screen 812. A lock control button 813 may be displayed on the title bar 811. Meanwhile, the lock command of FIG. 8A may be a downward drag gesture from the title bar 811. For example, the lock command may be a drag gesture having a start point starting at the title bar 811 and an end point 815 ending at a particular point.

Referring to FIG. 8B, the controller (not shown) controls to display a lock screen 821 in response to the input lock command. The controller controls to change a position of the title bar 811 into the end point 815 of the drag gesture of FIG. 8A and display the title bar 811 at the changed position.

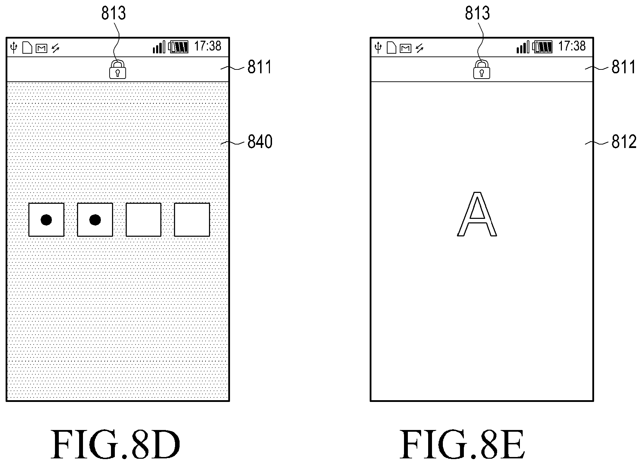

Referring to FIG. 8C, the unlock command may be an upward drag gesture 830 from the title bar 811. The controller (not shown) controls to display a password input screen 840 as shown in FIG. 8D in accordance with the upward drag gesture. The controller controls to display the title bar 811 on an uppermost side again. When a preset password is input, the controller controls to display the application execution screen 812 again, as shown in FIG. 8E.

According to the above description, the user can input the lock command or the unlock command in accordance with a change in the position of the title bar 811, which conforms with a user's intuition.

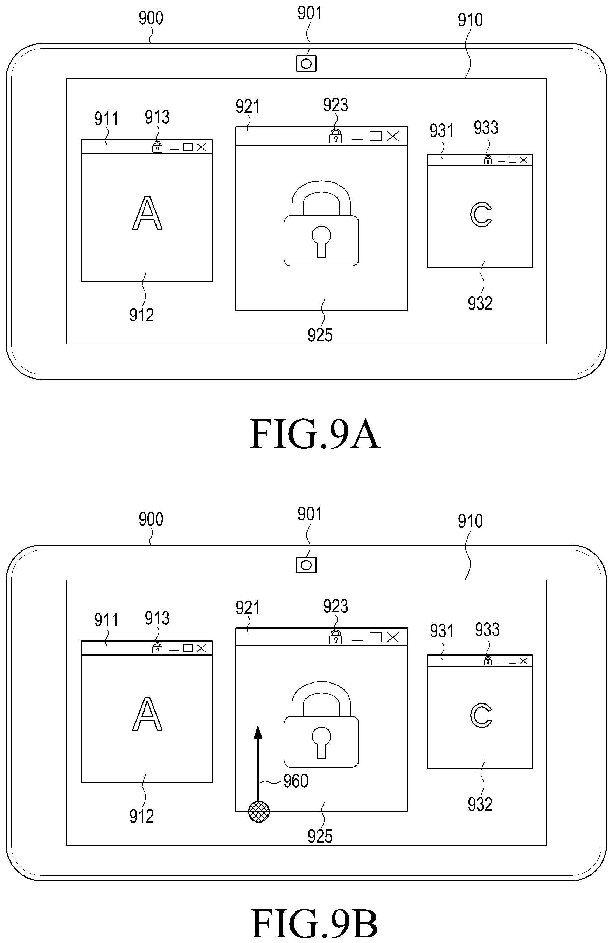

FIGS. 9A to 9D illustrate concepts describing an unlock command according to another embodiment of the present disclosure.

Referring to FIG. 9A, a first window, a second window, and a third window are displayed on a touch screen 910 of a display device 900. The first window may include a first title bar 911 and a first application execution screen 912. The second window may include a second title bar 921 and a second lock screen 925. The third window may include a third title bar 931 and a third application execution screen 932. That is, the user can input a lock command for the second window before the screen of FIG. 9A is displayed. In response to the lock command, the display device 900 replaces a second application execution screen (not shown) with the second lock screen 925 and displays the replaced second lock screen 925. Meanwhile, a first lock control button 913 is displayed on the first title bar 911, a second lock control button 923 is displayed on the second title bar 921, and a third lock control button 933 is displayed on the third title bar 931. Also, the display device 900 may include a front camera module 901

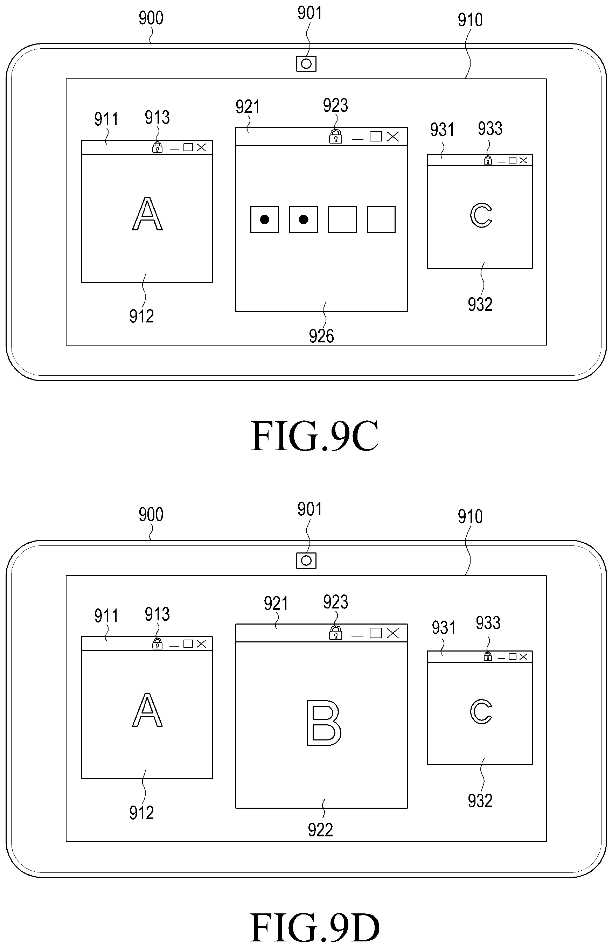

Referring to FIG. 9B, the unlock command may be an upward drag gesture 960 from a lower boundary of the lock screen. The user may input the upward drag gesture 960 from a lower boundary of the second lock screen 925 in order to unlock the second window. The controller (not shown) controls to display a password input screen 926, as shown in FIG. 9C, in accordance with the input unlock command. When a preset password is input, the controller controls to replace the second lock screen 925 with a second application screen 922 and display the replaced second application screen 922, as illustrated in FIG. 9D.

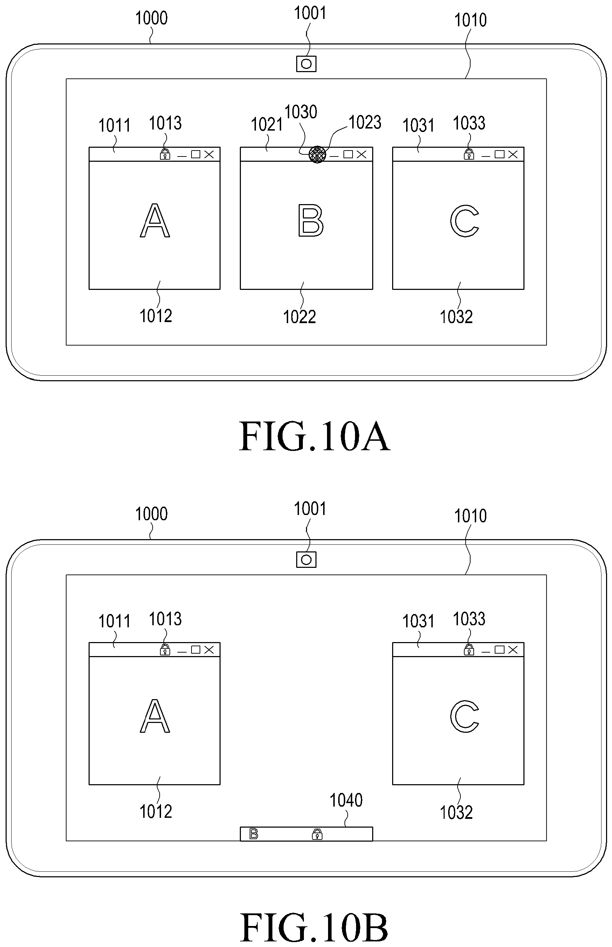

FIGS. 10A to 10E illustrate concepts describing a lock screen according to another embodiment of the present disclosure.

Referring to FIG. 10A, a first window, a second window, and a third window are displayed on a touch screen 1010 of a display device 1000 that includes a front camera module 1001. The first window may include a first title bar 1011 and a first application execution screen 1012. The second window may include a second title bar 1021 and a second application execution screen 1022. The third window may include a third title bar 1031 and a third application execution screen 1032. Meanwhile, a first lock control button 1013 is displayed on the first title bar 1011, a second lock control button 1023 is displayed on the second title bar 1021, and a third lock control button 1033 is displayed on the third title bar 1031. In FIG. 10A, the lock command may be a gesture touching the second lock control button 1023 as indicated by a reference numeral 1030.

When the lock command is input, the controller (not shown) controls to display a second lock screen. FIG. 10B illustrates a concept displaying a lock screen according to an embodiment of the present disclosure.

Referring to FIG. 10B, the controller (not shown) controls to place a second title bar 1040 on a lower end of the touch screen 1010 and not to display the second application execution screen 1022. Accordingly, another user cannot execute a second application. Further, even though another user touches the second title bar 1040, the controller controls not to process a gesture input into the second title bar 1040.

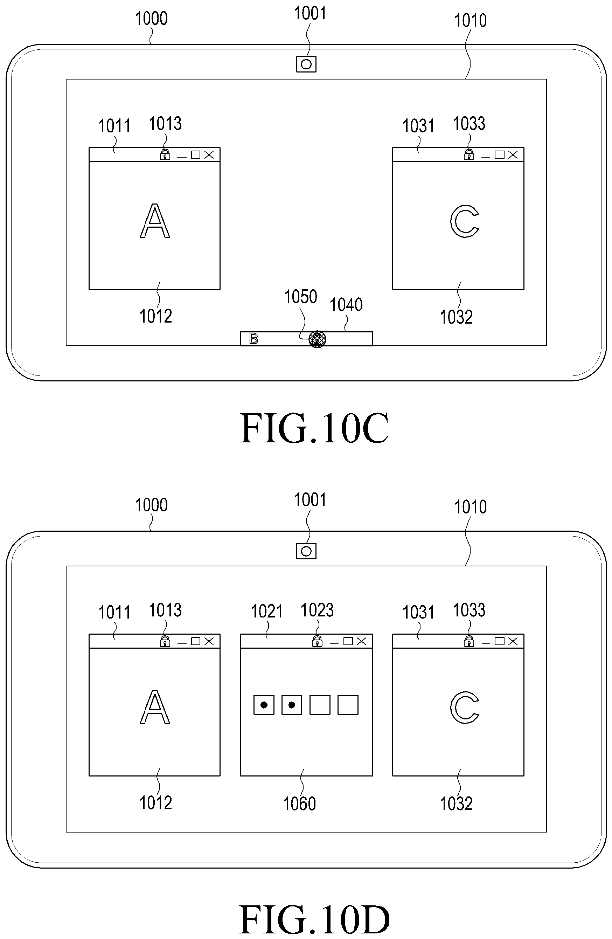

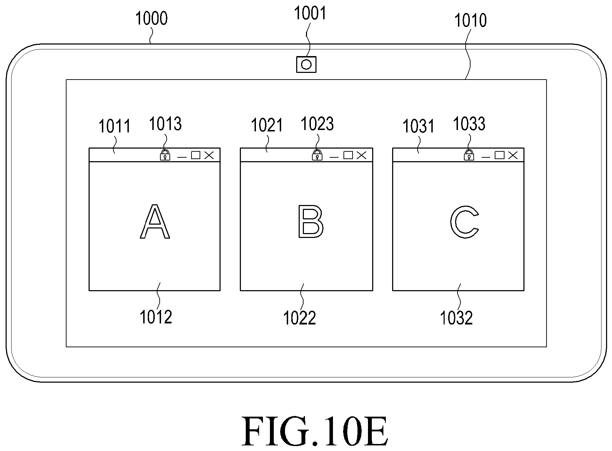

The unlock command of FIG. 10C is a touch of a lock control button 1050. When the unlock command is input, the controller (not shown) controls to display a password input screen 1060. More specifically, the controller controls to return the second title bar 1040, which is located at the lower end of the touch screen 1010 in FIG. 10C, to a position before the lock command is input and controls to display the returned second title bar 1040, as illustrated in FIG. 10D. When a preset password is input, the controller (not shown) controls to display the second application screen 1022, as illustrated in FIG. 10E.

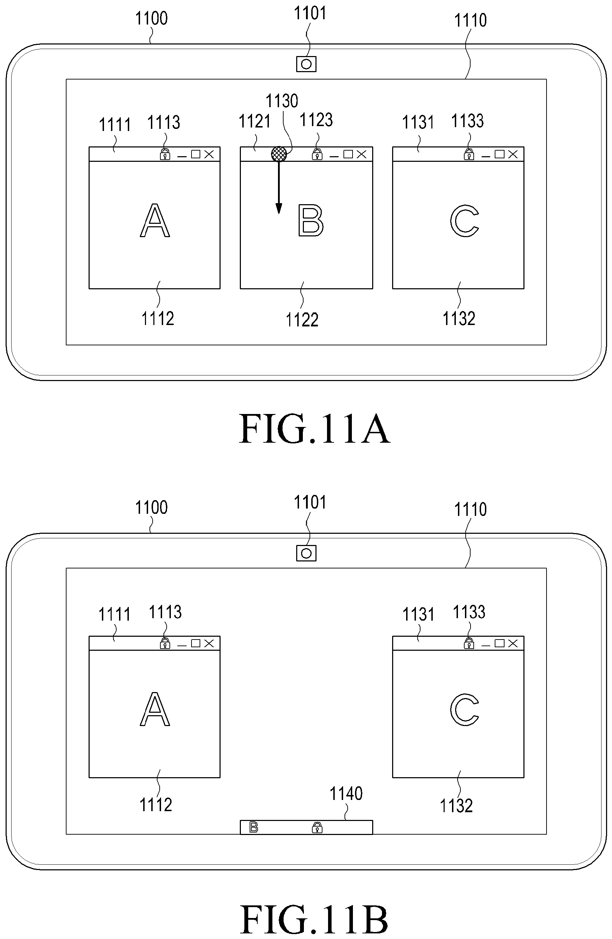

FIGS. 11A to 11E illustrate concepts describing a method of controlling the display device according to another embodiment of the present disclosure.

Referring to FIG. 11A, a first window, a second window, and a third window are displayed on a touch screen 1110 of a display device 1100 that includes a front camera module 1101. The first window may include a first title bar 1111 and a first application execution screen 1112. The second window may include a second title bar 1121 and a second application execution screen 1122. The third window may include a third title bar 1131 and a third application execution screen 1132. Meanwhile, a first lock control button 1113 is displayed on the first title bar 1111, a second lock control button 1123 is displayed on the second title bar 1121, and a third lock control button 1133 is displayed on the third title bar 1131. In FIG. 11A, the lock command may be a downward drag gesture 1130 from the second lock control button 1123.

When the lock command is input, the controller (not shown) controls to display a second lock screen. FIG. 11B illustrates a concept displaying a lock screen according to an embodiment of the present disclosure.

Referring to FIG. 11B, the controller (not shown) controls to place a second title bar 1140 on a lower end of the touch screen 1110 and not to display the second application execution screen 1122. Accordingly, another user cannot execute a second application. Further, even though another user touches the second title bar 1140, the controller controls not to process a gesture input into the second title bar 1140.

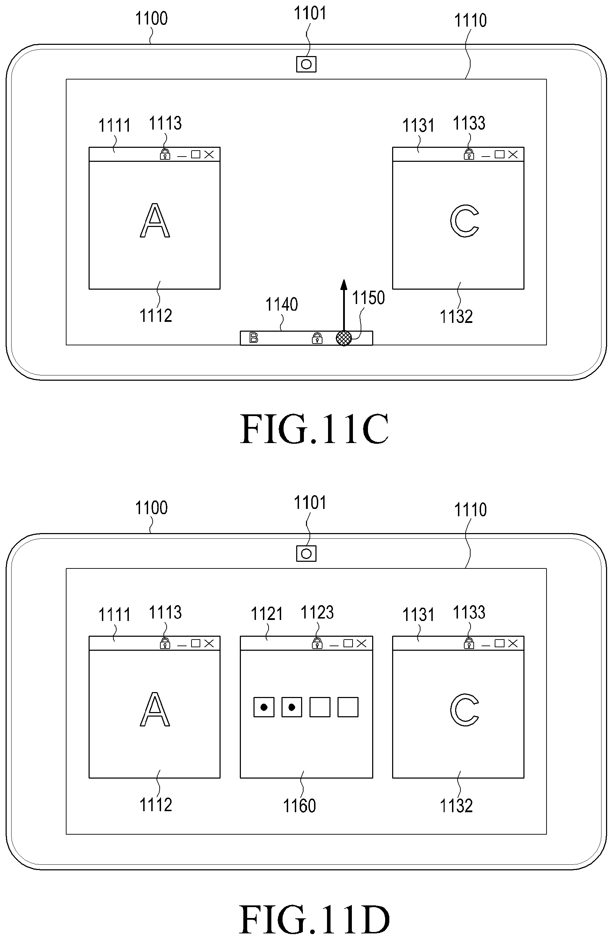

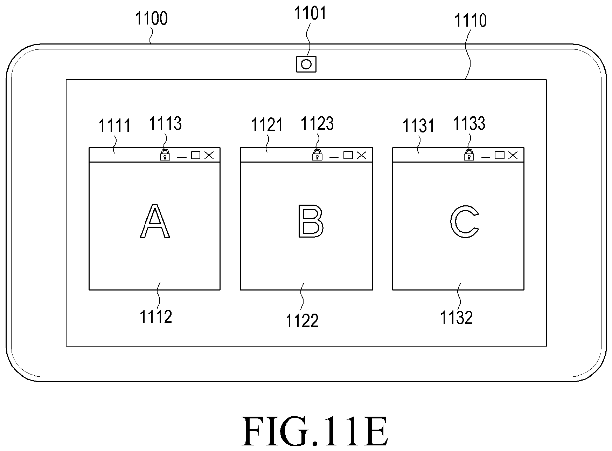

The unlock command of FIG. 11C is a touch of a lock control button. When the unlock command is input, the controller (not shown) controls to display a password input screen 1160. The unlock command may be an upward drag gesture 1150 from the second lock control button 1123. More specifically, the controller controls to return the second title bar 1140, which is located at the lower end of the touch screen 1110 in FIG. 11C, to a position before the lock command is input and controls to display the returned second title bar 1140 as illustrated in FIG. 11D. When a preset password is input, the controller controls to display the second application execution screen 1122, as illustrated in FIG. 11E.

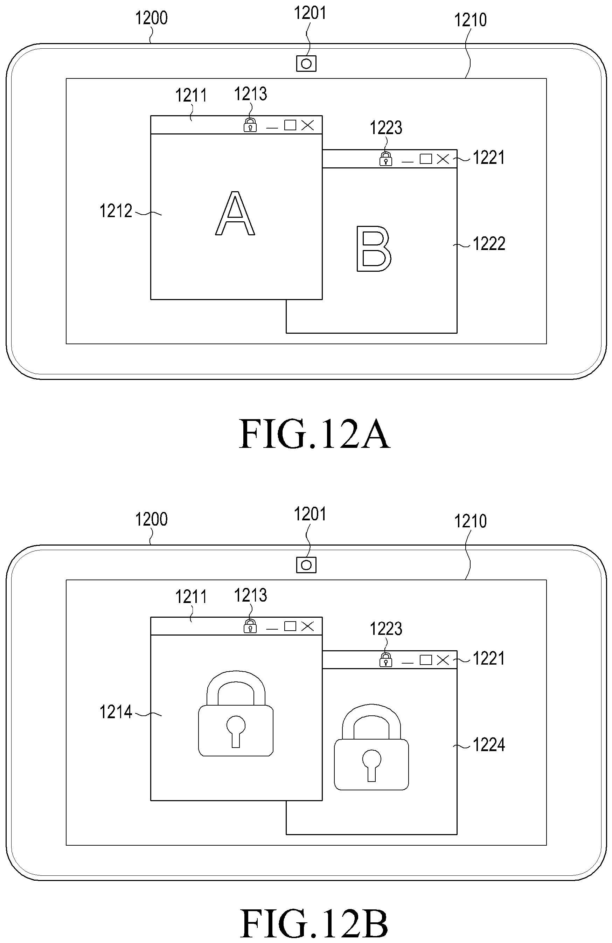

FIGS. 12A to 12E illustrate concepts describing a method of controlling the display device according to another embodiment of the present disclosure.

Referring to FIG. 12A, a first window and a second window are displayed on a touch screen 1210 of a display device 1200 that includes a front camera module 1201. The first window may include a first title bar 1211 and a first application execution screen 1212. The second window may include a second title bar 1221 and a second application execution screen 1222. Meanwhile, a first lock control button 1213 is displayed on the first title bar 1211, and a second lock control button 1223 is displayed on the second title bar 1221. The first window may be displayed while covering the second window. When display areas of the first window and the second window overlap each other, the controller (not shown) may identify task orders of a first application and a second application. The controller may identify that the task order of the first application is higher than the task order of the second application, and accordingly, the first window may be displayed to cover the second window in the overlapping part.

Meanwhile, the user can input a collective lock command for both the first window and the second window. For example, the user may simultaneously touch the first lock control button 1213 and the second lock control button 1223. Alternatively, the user may simultaneously input a downward drag gesture from the first title bar 1211 and a downward drag gesture from the second title bar 1221. Alternatively, the user may input a collective lock command by performing a gesture of covering the camera module 1201.

When the collective lock command is input, the controller controls to replace the first application execution screen 1212 with a first lock screen 1214 in order to display the replaced first lock screen 1214 and may replace the second application execution screen 1222 with a second lock screen 1224 in order to display the replaced second lock screen 1224, as illustrated in FIG. 12B,

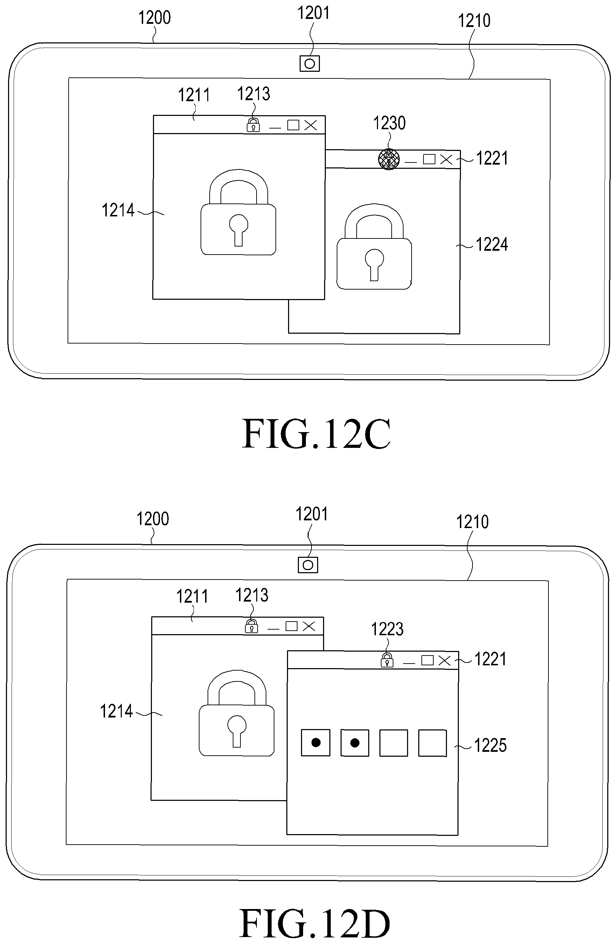

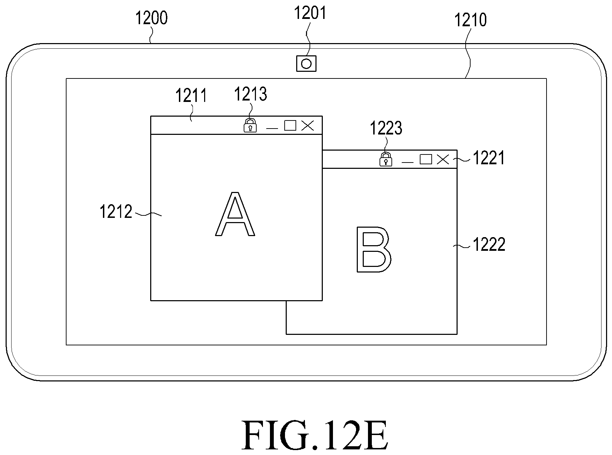

Referring to FIG. 12C, the user can input an unlock command with respect to an application to be used, for example, a second application. For example, the user can unlock the second window by touching the second lock control button 1223, as indicated by a reference numeral 1230. When the unlock command is input, the controller (not shown) controls to display a password input screen 1225, as illustrated in FIG. 12D. When a preset password is input, the controller controls to replace the second lock screen 1225 with the second application execution screen 1222 and may display the replaced second application execution screen 1222, as illustrated in FIG. 12E.

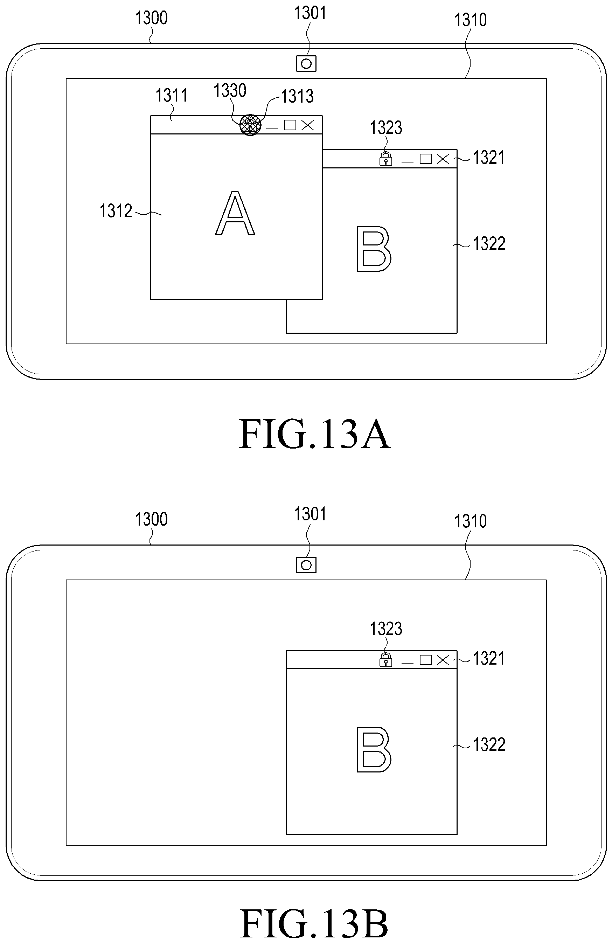

FIGS. 13A to 13D illustrate concepts of a display device according to another embodiment of the present disclosure.

Referring to FIG. 13A, a first window and a second window are displayed on a touch screen 1310 of a display device 1300 that includes a front camera module 1301. The first window may include a first title bar 1311 and a first application execution screen 1312. The second window may include a second title bar 1321 and a second application execution screen 1322. Meanwhile, a first lock control button 1313 is displayed on the first title bar 1311, and a second lock control button 1323 is displayed on the second title bar 1321. In FIG. 13A, the user can input the lock command for the first window by touching a first lock control button 1313.

When the lock command for the first window is input, then the controller (not shown) controls not to display the first window, as illustrated in FIG. 13B. For example, the controller can control to set a display position of the first window to a position leaving a coordinate of the touch screen 1310. Alternatively, the controller controls not to display the first window by setting a transparency of the first window as "0".

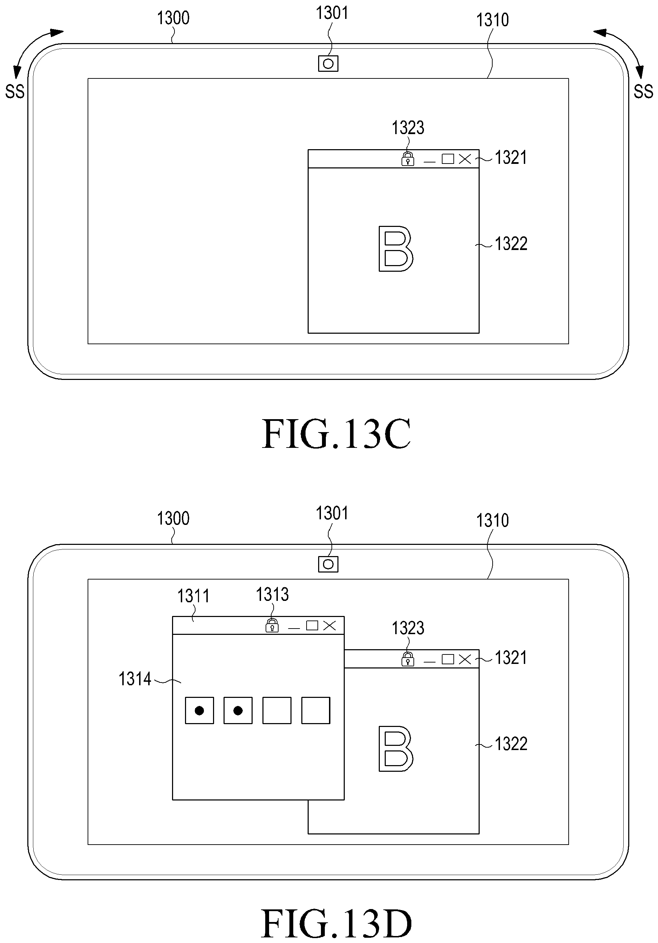

The user can input the unlock command, as illustrated in FIG. 13C. In FIG. 13C, the unlock command may be a gesture of tilting or shaking the display device 1300 in left and right directions.

When the unlock command is input, the controller controls to display a password input screen 1314, as illustrated in FIG. 13D.

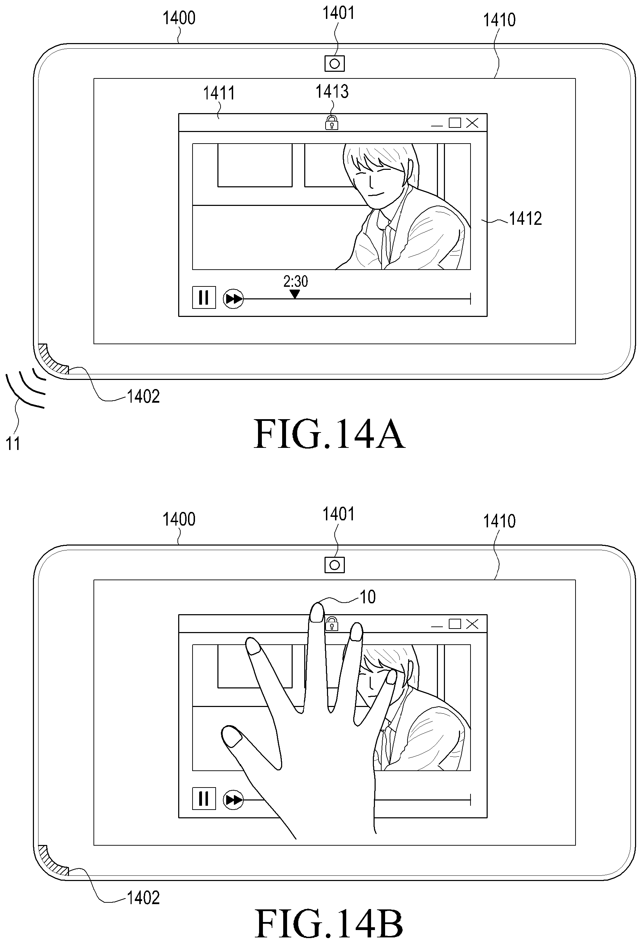

FIGS. 14A to 14C illustrate concepts of a display device according to another embodiment of the present disclosure.

Referring to FIG. 14A, a display device 1400, such as a video player or any other similar and/or suitable display device, executes an application that outputs a predetermined sound. The display device 1400 includes a touch screen 1410 and a front camera module 1401, and displays a window that includes a title bar 1411, a video player execution screen 1412, and a lock control button 1413. Further, an audio module 1402 outputs a sound 11 from the video player.

Referring to FIG. 14B, a user 10 can cover the window. The controller (not shown) may identify a gesture of covering the window by an image photographed by the camera module 1401. Alternatively, the controller may identify a touch performed by the user 10 on the window with a preset area or wider as the gesture of covering the window. The controller may determine the gesture to be an audio lock command, and accordingly, may control not to output the sound 11. Further, the user 10 can control to output the sound again by uncovering the window.

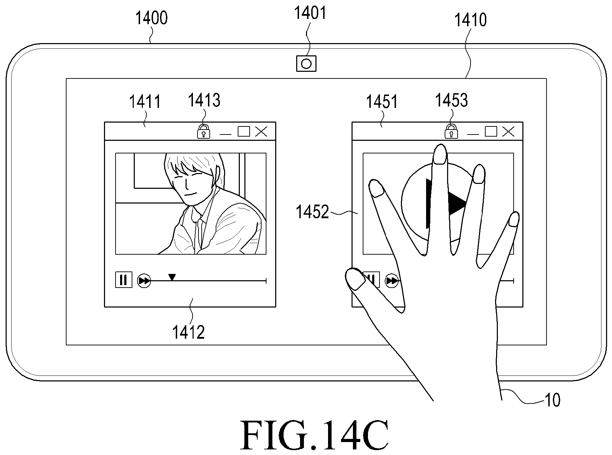

Referring to FIG. 14C, when the user executes two applications for outputting sounds, the user can control not to output a sound output by a second application by covering a second window that includes a second title bar 1451, a second video player execution screen 1452, and a second lock control button 1453.

It may be appreciated that the various embodiments of the present disclosure can be implemented in software, hardware, or a combination thereof. Any such software may be stored, for example, in a volatile or non-volatile storage device such as a Read Only Memory (ROM), a memory such as a Random Access Memory (RAM), a memory chip, a memory device, or a memory Integrated Circuit (IC), or a recordable optical or magnetic medium such as a Compact Disk (CD), a Digital Versatile Disk (DVD), a magnetic disk, or a magnetic tape, regardless of its ability to be erased or its ability to be re-recorded. Also, it will be appreciated that the various embodiments of the present disclosure may be implemented by a computer or a portable terminal which includes a control unit and a memory, in which the memory may be an example of a storage medium that is readable by a machine that is suitable for storing one or more programs that include instructions for implementing the various embodiments of the present disclosure. Accordingly, the present disclosure includes a program for a code implementing the apparatus and method described in the appended claims of the specification and a machine -readable and/or computer-readable storage medium for storing the program.

Moreover, such a program as described above can be electronically transferred through an arbitrary medium such as a communication signal transferred through cable or wireless connection, and the present properly includes the things equivalent to that. Further, the device can receive the program from a program providing apparatus connected to the device wirelessly or through a wire and store the received program. The program supply apparatus may include a program that includes instructions to execute the various embodiments of the present disclosure, a memory that stores information or the like required for the various embodiments of the present disclosure, a communication unit that conducts wired or wireless communication with the electronic apparatus, and a control unit that transmits a corresponding program to a transmission/reception apparatus in response to the request from the electronic apparatus or automatically.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method of controlling a mobile device (100, 400, 500, 700, 900, 1000, 1200, 1300, 1400) which displays a plurality of windows executing corresponding applications on a touch screen (190) of the mobile device, the method comprising:
displaying a first window and a second window on a touch screen (190) of the mobile device, each of the first window and the second window displaying an execution screen (1212, 1222) of a corresponding application in an unlock state;
receiving a lock command via the first window and the second window; and
in response to receiving the lock command, changing the first window and the second window from the unlock state to a lock state, wherein changing the first window and the second window from the unlock state to the lock state comprises changing the execution screen to a lock screen (1214, 1224);
wherein receiving the lock command includes receiving an input of simultaneous touches on a first lock control button (1213) of the first window and a second lock control (1223) button of the second window, or simultaneous downward drag gestures on a title bar (1211) of the first window and a title bar (1221) of the second window, as a collective lock command for both the first window and the second window; the method further comprising:
in response to detecting an unlock command on the first window, displaying, on the first window, a password input screen (1225) including an interface to unlock the first window and second window by inputting a password, while the second window displays the lock screen;
obtaining, via the interface included in the password input screen, the password for unlocking the first window; and
displaying, on the first window and the second window, an execution screen (1212, 1222) of the corresponding application, when the password corresponds to a predetermined password.

2. The method of claim 1, wherein the displaying of the first window and the second window comprises:
displaying a title bar (1211) including a lock control button (1213) for inputting at least one of the lock command and an unlock command of the window.

3. The method of claim 1,wherein receiving the unlock command comprises receiving at least one of a first drag gesture (830) on the first window which starts from the title bar included in the first window towards a top boundary of the first window, and a second drag gesture (960) on the first window which starts from a lower boundary of the first window towards the top boundary of the first window

4. A mobile device (100, 400, 500, 700, 900, 1000, 1200, 1300, 1400) which displays a plurality of windows executing corresponding applications on a touch screen (190) of the mobile device, the mobile device comprising:
a touch screen (190); and
a controller (110) configured to:
display a first window and a second window on the touch screen, each of the first window and the second window displaying an execution screen (1212, 1222) of a corresponding application in a unlock state;
receive a lock command via the first window and the second window; and
in response to receiving the lock command, changing the first window and the second window from the unlock state to a lock state, wherein changing the first window and the second window from the unlock state to the lock state comprises changing the execution screen to a lock screen (1214, 1224);
wherein the controller (110) is configured to:
receive the lock command as a collective lock command for both the first window and the second window upon detection of simultaneous touches of a first lock control button (1213) of the first window and a second lock control button (1223) of the second window, or simultaneous downward drag gestures on a title bar (1211) of the first window and a title bar (1221) of the second window, the method further comprising:
in response to detecting an unlock command on the first window, display, on the first window, a password input screen (1225) including an interface to unlock the first window and second window by inputting a password, while the second window displays the lock screen;
obtain, via the interface included in the password input screen, the password for unlocking the first window; and
display, on the first window and the second window, an execution screen (1212, 1222) of the corresponding application, when the password corresponds to a predetermined password.

5. The mobile device (100, 400, 500, 700, 900, 1000, 1200, 1300, 1400) of claim 4, wherein the controller (110) is further configured to control the touch screen to display a title bar (1211) including a lock control button (1213) for inputting at least one of the lock command and an unlock command of the window.

6. The mobile device (100, 400, 500, 700, 900, 1000, 1200, 1300, 1400) of claim 4, wherein the controller (110) is further configured to receive an unlock command by receiving at least one of a first drag gesture (830) on the first window which starts from the title bar included in the first window towards the top boundary of the first window, and a second drag gesture (960) on the first window which starts from a lower boundary of the first window towards the top boundary of the first window.

## Patentansprüche

1. Verfahren zur Steuerung eines Mobilgeräts (100, 400, 500, 700, 900, 1000, 1200, 1300, 1400), das eine Vielzahl von Fenstern anzeigt, die entsprechende Anwendungen auf einem Touchscreen (190) des Mobilgeräts ausführen, wobei das Verfahren umfasst:
ein Anzeigen eines ersten Fensters und eines zweiten Fensters auf einem Touchscreen (190) des Mobilgeräts, wobei jedes des ersten Fensters und des zweiten Fensters einen Ausführungsbildschirm (1212, 1222) einer entsprechenden Anwendung in einem unverriegelten Zustand anzeigt;
ein Empfangen eines Verriegelungsbefehls über das erste Fenster und das zweite Fenster; und
in Reaktion auf das Empfangen des Verriegelungsbefehls ein Ändern des ersten Fensters und des zweiten Fensters aus dem unverriegelten Zustand in einen verriegelten Zustand, wobei das Ändern des ersten Fensters und des zweiten Fensters aus dem unverriegelten Zustand in den verriegelten Zustand ein Ändern des Ausführungsbildschirms zu einem Verriegelungsbildschirm (1212, 1224) umfasst;
wobei das Empfangen des Verriegelungsbefehls ein Empfangen einer Eingabe gleichzeitiger Berührungen auf einer ersten Verriegelungssteuerungstaste (1213) des ersten Fensters und einer zweiten Verriegelungssteuerungstaste (1223) des zweiten Fensters oder gleichzeitige, nach unten gerichtete Zuggesten auf einem Titelbalken (1211) des ersten Fensters und einem Titelbalken (1221) des zweiten Fensters als einen kollektiven Verriegelungsbefehl für das erste Fenster und das zweite Fenster enthält; wobei das Verfahren ferner umfasst:
in Reaktion auf ein Detektieren eines Entriegelungsbefehls auf dem ersten Fenster ein Anzeigen, auf dem ersten Fenster, eines Kennworteingabebildschirms (1225), der eine Oberfläche zum Entriegeln des ersten Fensters und des zweiten Fensters durch Eingeben eines Kennworts enthält, während das zweite Fenster den Verriegelungsbildschirm anzeigt;
ein Erhalten, über die im Kennworteingabebildschirm enthaltene Oberfläche, des Kennworts zum Entsperren des ersten Fensters; und
ein Anzeigen, auf dem ersten Fenster und dem zweiten Fenster, eines Auführungsbildschirms (1212, 1222) der entsprechenden Anwendung, wenn das Kennwort einem vorgegebenen Kennwort entspricht.

2. Verfahren nach Anspruch 1, wobei das Anzeigen des ersten Fensters und des zweiten Fensters umfasst:
ein Anzeigen eines Titelbalkens (1211), der eine Verriegelungssteuerungstaste (1213) zum Eingaben mindestens eines des Verriegelungsbefehls und eines Entriegelungsbefehls des Fensters enthält.

3. Verfahren nach Anspruch 1, wobei das Empfangen des Entriegelungsbefehls ein Empfangen mindestens einer einer ersten Zuggeste (830) auf dem ersten Fenster umfasst, die bei dem
im ersten Fenster enthaltenen Titelbalken beginnt, zu einer oberen Grenze des ersten Fensters, und einer zweiten Zuggeste (960) auf dem ersten Fenster, die bei einer unteren Grenze des ersten Fensters beginnt, zur oberen Grenze des ersten Fensters.

4. Mobilgerät (100, 400, 500, 700, 900, 1000, 1200, 1300, 1400), das eine Vielzahl von Fenstern anzeigt, die entsprechende Anwendungen auf einem Touchscreen (190) des Mobilgeräts ausführen, wobei das Mobilgerät umfasst:
einen Touchscreen (190); und
eine Steuerung (110), die konfiguriert ist, um:
ein erstes Fenster und ein zweites Fenster auf dem Touchscreen anzuzeigen, wobei jedes des ersten Fensters und des zweiten Fensters einen Ausführungsbildschirm (1212, 1222) einer entsprechenden Anwendung in einem unverriegelten Zustand anzeigt;
einen Verriegelungsbefehl über das erste Fenster und das zweite Fenster zu empfangen; und in Reaktion auf das Empfangen des Verriegelungsbefehls das erste Fenster und das zweite Fenster aus dem unverriegelten Zustand in einen verriegelten Zustand zu ändern, wobei das Ändern des ersten Fensters und des zweiten Fensters aus dem unverriegelten Zustand in den verriegelten Zustand ein Ändern des Ausführungsbildschirms zu einem Verriegelungsbildschirm (1214, 1224) umfasst;
wobei die Steuerung (110) konfiguriert ist, um:
nach Detektion gleichzeitiger Berührungen einer ersten Verriegelungssteuerungstaste (1213) des ersten Fensters und einer zweiten Verriegelungssteuerungstaste (1223) des zweiten Fensters oder gleichzeitiger, nach unten gerichteter Zuggesten auf einem Titelbalken (1211) des ersten Fensters und einem Titelbalken (1221) des zweiten Fensters den Verriegelungsbefehl als einen kollektiven Verriegelungsbefehl für das erste Fenster und das zweite Fenster zu empfangen, wobei das Verfahren ferner umfasst:
in Reaktion auf ein Detektieren eines Entriegelungsbefehls auf dem ersten Fenster ein Anzeigen, auf dem ersten Fenster, eines Kennworteingabebildschirms (1225), der eine Oberfläche zum Entriegeln des ersten Fensters und des zweiten Fensters durch Eingeben eines Kennworts enthält, während das zweite Fenster den Verriegelungsbildschirm anzeigt;
ein Erhalten, über die im Kennworteingabebildschirm enthaltene Oberfläche, des Kennworts zum Entsperren des ersten Fensters; und
ein Anzeigen, auf dem ersten Fenster und dem zweiten Fenster, eines Auführungsbildschirms (1212, 1222) der entsprechenden Anwendung, wenn das Kennwort einem vorgegebenen Kennwort entspricht.

5. Mobilgerät (100, 400, 500, 700, 900, 1000, 1200, 1300, 1400) nach Anspruch 4, wobei die Steuerung (110) ferner konfiguriert ist, um den Touchscreen zu steuern, um einen Titelbalken (1211), enthaltend eine Verriegelungssteuerungstaste (1213) zum Eingeben mindestens eines des Verriegelungsbefehls und eines Entriegelungsbefehls des Fensters, anzuzeigen.

6. Mobilgerät (100, 400, 500, 700, 900, 1000, 1200, 1300, 1400) nach Anspruch 4, wobei die Steuerung (110) ferner konfiguriert ist, um einen Entriegelungsbefehl durch Empfangen mindestens einer einer ersten Zuggeste (830) auf dem ersten Fenster, die bei dem im ersten Fenster enthaltenen Titelbalken beginnt, zu einer oberen Grenze des ersten Fensters, und einer zweiten Zuggeste (960) auf dem ersten Fenster, die an einer unteren Grenze des ersten Fensters beginnt, zur oberen Grenze des ersten Fensters zu empfangen.

## Revendications

1. Procédé de commande d'un dispositif mobile (100, 400, 500, 700, 900, 1000, 1200, 1300, 1400) qui affiche une pluralité de fenêtres exécutant des applications correspondantes sur un écran tactile (190) du dispositif mobile, le procédé comprenant :
l'affichage d'une première fenêtre et d'une seconde fenêtre sur un écran tactile (190) du dispositif mobile, chacune de la première fenêtre et de la seconde fenêtre affichant un écran d'exécution (1212, 1222) d'une application correspondante dans un état de déverrouillage ;
la réception d'une commande de verrouillage par l'intermédiaire de la première fenêtre et de la seconde fenêtre ; et
en réponse à la réception de la commande de verrouillage, le changement de la première fenêtre et de la seconde fenêtre de l'état de déverrouillage à un état de verrouillage, ledit changement de la première fenêtre et de la seconde fenêtre de l'état de déverrouillage à l'état de verrouillage comprenant le changement de l'écran d'exécution en un écran de verrouillage (1214, 1224) ;
ladite réception de la commande de verrouillage comprenant la réception d'une saisie de touches simultanées sur un premier bouton de commande de verrouillage (1213) de la première fenêtre et un second bouton de commande de verrouillage (1223) de la seconde fenêtre, ou des gestes de glissement vers le bas simultanés sur la barre de titre (1211) de la première fenêtre et la barre de titre (1221) de la seconde fenêtre, en tant que commande de verrouillage collectif pour la première fenêtre et la seconde fenêtre ; le procédé comprenant en outre :
en réponse à la détection d'une commande de déverrouillage sur la première fenêtre, l'affichage, sur la première fenêtre, d'un écran de saisie de mot de passe (1225) comprenant une interface pour déverrouiller la première fenêtre et la seconde fenêtre en saisissant un mot de passe, tandis que la seconde fenêtre affiche l'écran de verrouillage ;
l'obtention, par l'intermédiaire de l'interface comprise dans l'écran de saisie de mot de passe, du mot de passe pour déverrouiller la première fenêtre ; et
l'affichage, sur la première fenêtre et la seconde fenêtre, d'un écran d'exécution (1212, 1222) de l'application correspondante, lorsque le mot de passe correspond à un mot de passe prédéfini.

2. Procédé selon la revendication 1, ledit affichage de la première fenêtre et de la seconde fenêtre comprenant :
l'affichage d'une barre de titre (1211) comprenant un bouton de commande de verrouillage (1213) en vue de la saisie d'au moins l'une de la commande de verrouillage et d'une commande de déverrouillage de la fenêtre.

3. Procédé selon la revendication 1, ladite réception de la commande de déverrouillage comprenant la réception d'au moins l'un d'un premier geste de glissement (830) sur la première fenêtre qui part de
la barre de titre comprise dans la première fenêtre vers une limite supérieure de la première fenêtre, et un second geste de glissement (960) sur la première fenêtre qui part d'une limite inférieure de la première fenêtre vers la limite supérieure de la première fenêtre.

4. Dispositif mobile (100, 400, 500, 700, 900, 1000, 1200, 1300, 1400) qui affiche une pluralité de fenêtres exécutant des applications correspondantes sur un écran tactile (190) du dispositif mobile, le dispositif mobile comprenant :
un écran tactile (190) ; et
un dispositif de commande (110) configuré pour :
afficher une première fenêtre et une seconde fenêtre sur l'écran tactile, chacune de la première fenêtre et de la seconde fenêtre affichant un écran d'exécution (1212, 1222) d'une application correspondante dans un état de déverrouillage ;
recevoir une commande de verrouillage par l'intermédiaire de la première fenêtre et de la seconde fenêtre ; et en réponse à la réception de la commande de verrouillage, changer la première fenêtre et la seconde fenêtre de l'état de déverrouillage à un état de verrouillage, ledit changement de la première fenêtre et de la seconde fenêtre de l'état de déverrouillage à l'état de verrouillage comprenant le changement de l'écran d'exécution en un écran de verrouillage (1214, 1224) ;
ledit dispositif de commande (110) étant configuré pour :
recevoir la commande de verrouillage en tant que commande de verrouillage collective pour la première fenêtre et la seconde fenêtre lors de la détection de touches simultanées d'un premier bouton de commande de verrouillage (1213) de la première fenêtre et d'un second bouton de commande de verrouillage (1223) de la seconde fenêtre, ou des gestes de glissement vers le bas simultanés sur la barre de titre (1211) de la première fenêtre et la barre de titre (1221) de la seconde fenêtre, le procédé comprenant en outre :
en réponse à la détection d'une commande de déverrouillage sur la première fenêtre, l'affichage, sur la première fenêtre, d'un écran de saisie de mot de passe (1225) comprenant une interface pour déverrouiller la première fenêtre et la seconde fenêtre en saisissant un mot de passe, tandis que la seconde fenêtre affiche l'écran de verrouillage ;
l'obtention, par l'intermédiaire de l'interface comprise dans l'écran de saisie du mot de passe, le mot de passe pour déverrouiller la première fenêtre ; et
l'affichage, sur la première fenêtre et la seconde fenêtre, d'un écran d'exécution (1212, 1222) de l'application correspondante, lorsque le mot de passe correspond à un mot de passe prédéfini.

5. Dispositif mobile (100, 400, 500, 700, 900, 1000, 1200, 1300, 1400) selon la revendication 4, ledit dispositif de commande (110) étant en outre configuré pour commander l'écran tactile pour afficher la barre de titre (1211) comprenant un bouton de commande de verrouillage (1213) pour saisir au moins l'une de la commande de verrouillage et d'une commande de déverrouillage de la fenêtre.

6. Dispositif mobile (100, 400, 500, 700, 900, 1000, 1200, 1300, 1400) selon la revendication 4, ledit dispositif de commande (110) étant en outre configuré pour recevoir une commande de déverrouillage en recevant au moins l'un d'un premier geste de glissement (830) sur la première fenêtre qui part de la barre de titre comprise dans la première fenêtre vers la limite supérieure de la première fenêtre, et un seconde geste de glissement (960) sur la première fenêtre qui part d'une limite inférieure de la première fenêtre vers la limite supérieure de la première fenêtre.
